(19) Europäisches Patentamt / European Patent Office / Office européen des brevets

(11) **EP 4 379 235 B1**

(12) **EUROPEAN PATENT SPECIFICATION**

(45) Date of publication and mention
of the grant of the patent:
**06.05.2026 Bulletin 2026/19**

(21) Application number: **22849394.6**

(22) Date of filing: **22.07.2022**

(51) International Patent Classification (IPC):
**F16G 1/28** *(2006.01)* **B29D 29/08** *(2006.01)*

(52) Cooperative Patent Classification (CPC):
**B29D 29/08; F16G 1/08; F16G 1/10; F16G 1/28**

(86) International application number:
**PCT/JP2022/028486**

(87) International publication number:
**WO 2023/008332 (02.02.2023 Gazette 2023/05)**

(54) **TOOTHED BELT AND MANUFACTURING METHOD THEREFOR**

ZAHNRIEMEN UND HERSTELLUNGSVERFAHREN DAFÜR

COURROIE CRANTÉE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.07.2021 JP 2021122815
16.03.2022 JP 2022041284
01.07.2022 JP 2022107110**

(43) Date of publication of application:
**05.06.2024 Bulletin 2024/23**

(73) Proprietor: **Mitsuboshi Belting Ltd.
Kobe-shi, Hyogo 653-0024 (JP)**

(72) Inventors:
• **OSAKI Susumu
Kobe-shi, Hyogo 653-0024 (JP)**
• **HEMMI Yusuke
Kobe-shi, Hyogo 653-0024 (JP)**
• **MIZUMOTO Takumi
Kobe-shi, Hyogo 653-0024 (JP)**

(74) Representative: **Hoffmann Eitle
Patent- und Rechtsanwälte PartmbB
Arabellastraße 30
81925 München (DE)**

(56) References cited:
JP-A- 2007 205 374      JP-A- 2019 194 494
US-A1- 2012 252 619

# EP 4 379 235 B1

**Description**

TECHNICAL FIELD

The present invention relates to a rubber toothed belt (or rubber toothed belt coated with tooth fabric) which meshes with a toothed pulley and which is useful for transmitting power in synchronization with a general industrial machine or the like under a high load condition, and a manufacturing method therefor.

BACKGROUND ART

A power-transmission belt that transmits power is roughly classified into a frictional power-transmission belt and a synchronous power-transmission belt. Examples of the frictional power-transmission belt include a flat belt, a V belt, and a V-ribbed belt, and examples of the synchronous power-transmission belt include a toothed belt. The toothed belt includes a back portion in which a tension member is embedded substantially parallel to a belt circumferential direction, tooth portions arranged at a predetermined interval in the belt circumferential direction, and a tooth fabric covering a surface of the tooth portions. The toothed portions of the toothed belt transmit power by being fitted to a pulley having grooves facing the toothed portions. Slipping does not occur between the toothed belt and the pulley, and the toothed belt can reliably transmit power even with a high load. In recent years, there has been an increasing number of examples used for industrial machine, internal combustion engines of automobiles, and rear-wheel drive of motorcycles, and in particular, with miniaturization of machines, a toothed belt coping with miniaturization is also required (to cope with a small-diameter pulley, and to reduce a width). In a case where a miniaturized toothed belt is used in the same environment as a conventional large-sized toothed belt, a higher load acts on the toothed belt. Therefore, a toothed belt coping with miniaturization and having high durability capable of withstanding use under a condition where a higher load acts is required.

An important factor for the durability of the toothed belt is rigidity (deformation resistance) of the tooth portion. In a process of meshing with the toothed pulley, repeated deformation of the tooth portion due to contact with the toothed pulley leads to a failure such as meshing failure due to tooth skipping (jumping) or tooth chipping due to a crack in a tooth root portion. The tooth chipping is a failure form in which the tooth portion drops from a belt main body and a mechanism thereof is considered to be that in a process in which stress acts on a root of the tooth portion intensively due to repeated deformation of the tooth portion, a minute crack is first generated in the tooth root, and then the crack is grown. In particular, in a case where the toothed belt is used under a condition where a high load acts, the stress concentrated on the tooth root portion becomes particularly large, and a crack is generated from the tooth root as a starting point, which easily leads to tooth chipping.

Therefore, it is necessary to increase the rigidity in order to prevent deformation of the tooth portion. On the other hand, in a case where the rigidity of the tooth portion is increased, bending rigidity of the belt is also increased, and bendability is deteriorated. In a case where the toothed pulley is miniaturized (reduced in diameter) along with the miniaturization of the machine, high bendability (flexibility) is also required so that the toothed belt is wound around the small-diameter pulley to provide good meshing property. In order to enhance the bendability, enhancing the rigidity of the tooth portion is not suitable.

That is, in the toothed belt, the rigidity (deformation resistance) and the bendability (flexibility) of the tooth portion are in a contradictory relation and are difficult to be compatible with each other, and thus a balanced method for implementing the compatibility is required.

JP2011-85160A discloses a toothed belt in which an intermediate canvas having an elastic modulus of 100 GPa or more in a belt width direction is embedded inside a belt main body in which tooth portions and tooth bottom portions are alternately provided along a longitudinal direction on one surface, and describes, as the tooth portion, a tooth portion which is formed by a core rubber layer constituting the inside of the tooth portion and tooth rubber layers disposed along an outer circumference of the tooth portion and laminated on an one surface side of the core rubber layer, and in which a modulus of the core rubber layer is higher than a modulus of the tooth rubber layer.

In addition, WO2011/045984 discloses a toothed belt including a belt main body in which tooth portions and tooth bottom portions are alternately provided along a longitudinal direction on one surface, and describes as the belt main body portion, a belt main body portion including a tooth rubber layer disposed along an outer circumference of the tooth portions and a core rubber layer constituting an inside of the tooth portions, in which the core rubber layer has a higher modulus than the tooth rubber layer.

A further example of the prior art can be seen in document US 2012/252619 A1.

SUMMARY OF INVENTION

TECHNICAL PROBLEM

However, even in the toothed belts according to JP2011-85160A and WO2011/045984, it is difficult to implement both rigidity and bendability of the tooth portion of the toothed belt.

Accordingly, an object of the present invention is to provide a toothed belt capable of implementing both rigidity (deformation resistance) and bendability (flexibility) of a tooth portion, and a manufacturing method therefor.

SOLUTION TO PROBLEM

In order to achieve the above object, the present inventors have focused on a layer structure (distribution of mechanical properties) in a rubber layer constituting a tooth portion, and have intensively studied an aspect in which both rigidity (deformation resistance) and bendability (flexibility) of the tooth portion in a contradictory relation can be implemented while securing rigidity of the tooth portion that can withstand use under a condition where a higher load acts. As a result, the present inventors have found that both rigidity and bendability of a tooth portion of a toothed belt can be implemented by forming the tooth portion by a tooth fabric, a first rubber layer formed along the tooth fabric, and a second rubber layer formed between the first rubber layer and a tension member, and by adjusting an elastic modulus of the first rubber layer to be larger than an elastic modulus of the second rubber layer, thereby completing the present invention.

That is, a toothed belt as an aspect [1] of the present invention includes:

a back portion in which a tension member extending along a belt circumferential direction is embedded;
a plurality of tooth portions formed on an inner circumferential surface of the back portion with an interval in the belt circumferential direction;
a back rubber layer formed on a belt outer circumference side with respect to the tension member; and
a first rubber layer and a second rubber layer formed on a belt inner circumferential side with respect to the tension member, in which
an inner circumferential belt surface is formed of a tooth fabric,
the back portion includes the back rubber layer,
an elastic modulus of the first rubber layer is larger than an elastic modulus of the second rubber layer, and
the tooth portion includes the tooth fabric, the first rubber layer formed along the tooth fabric, and the second rubber layer interposed between the first rubber layer and the tension member.

An aspect [2] of the present invention is an aspect in which
an area proportion of the first rubber layer is 10 area% to 80 area% with respect to a total area of the first rubber layer and the second rubber layer in a cross-sectional view in the belt circumferential direction.

An aspect [3] of the present invention is an aspect in which in the above aspect [1] or [2],
a tensile elastic modulus of the first rubber layer is 0.6 MPa to 20 MPa, and a tensile elastic modulus of the second rubber layer is 0.5 MPa to 5 MPa.

An aspect [4] of the present invention is an aspect in which in any of the above aspects [1] to [3],
a tensile elastic modulus of the first rubber layer is 1.2 times to 4 times a tensile elastic modulus of the second rubber layer.

An aspect [5] of the present invention is an aspect in which in any of the above aspects [1] to [4],

the first rubber layer includes a first crosslinked rubber composition including a first rubber component, a first crosslinking agent, and a first co-crosslinking agent,
the second rubber layer includes a second crosslinked rubber composition including a second rubber component, a second crosslinking agent, and a second co-crosslinking agent,
the first rubber component includes a first composite polymer including a hydrogenated nitrile rubber and an unsaturated carboxylic acid metal salt,
the second rubber component includes a second composite polymer including a hydrogenated nitrile rubber and an unsaturated carboxylic acid metal salt,
a proportion of the first co-crosslinking agent with respect to 100 parts by mass of the first rubber component is 1 part by mass to 40 parts by mass, and
a proportion of the second co-crosslinking agent with respect to 100 parts by mass of the second rubber component is 0.2 parts by mass to 25 parts by mass.

An aspect [6] of the present invention is an aspect in which in the above aspect [5],

the first crosslinked rubber composition further includes a first reinforcing inorganic filler,
the second crosslinked rubber composition further includes a second reinforcing inorganic filler,

a proportion of the first composite polymer in the first rubber component is 80 mass% or more,
a proportion of the second composite polymer in the second rubber component is 30 mass% or more,
the first crosslinking agent includes a first organic peroxide, and a proportion of the first organic peroxide with respect to 100 parts by mass of the first rubber component is 1 part by mass to 20 parts by mass,
the second crosslinking agent includes a second organic peroxide, and a proportion of the second organic peroxide with respect to 100 parts by mass of the second rubber component is 0.5 parts by mass to 5 parts by mass,
a proportion of the first reinforcing inorganic filler with respect to 100 parts by mass of the first rubber component is 10 parts by mass or less, and
a proportion of the second reinforcing inorganic filler with respect to 100 parts by mass of the second rubber component is 10 parts by mass or less.

The present invention also includes, as an aspect [7], a method for manufacturing a toothed belt according to any of the above aspects [1] to [6], the method including:
a preforming step of preparing a preformed body in which a tooth fabric precursor for forming a tooth fabric, an uncrosslinked rubber sheet for forming a first rubber layer, and an uncrosslinked rubber sheet for forming a second rubber layer are laminated.

ADVANTAGEOUS EFFECTS OF INVENTION

In the present invention, a tooth portion of a toothed belt is formed by a tooth fabric constituting an inner circumferential belt surface, a first rubber layer formed along the tooth fabric, and a second rubber layer formed between the first rubber layer and a tension member, and an elastic modulus of the first rubber layer is adjusted to be larger than an elastic modulus of the second rubber layer, and therefore, it is possible to implement both rigidity and bendability of the tooth portion in a contradictory relation while ensuring rigidity of the tooth portion that can withstand use under a condition where a higher load acts. Therefore, according to the present invention, it is possible to provide a toothed belt capable of preventing jumping (tooth skipping) during belt running and improving belt durability. In this toothed belt, it is possible to prevent a loss of the tooth portion (tooth chipping) due to jumping or the like, and it is possible to extend the service life during high load running.

BRIEF DESCRIPTION OF DRAWINGS

FIG. 1 is a partial cross-sectional perspective view showing an example of a toothed belt according to the present invention.
FIG. 2 is a schematic cross-sectional view of the toothed belt in FIG. 1.
FIG. 3 is a schematic cross-sectional view for explaining a function of a tooth portion of the toothed belt in FIG. 1.
FIG. 4 is a schematic view for explaining a measurement method of a tooth rigidity test according to Examples.
FIG. 5 is a graph showing an example of measurement data for explaining the measurement method of the tooth rigidity test according to Examples.
FIG. 6 is a schematic cross-sectional view of a tooth portion of a toothed belt obtained in Examples.

DESCRIPTION OF EMBODIMENTS

<Toothed Belt>

Hereinafter, an example of a toothed belt according to the present invention will be described in detail with reference to the accompanying drawings as necessary.

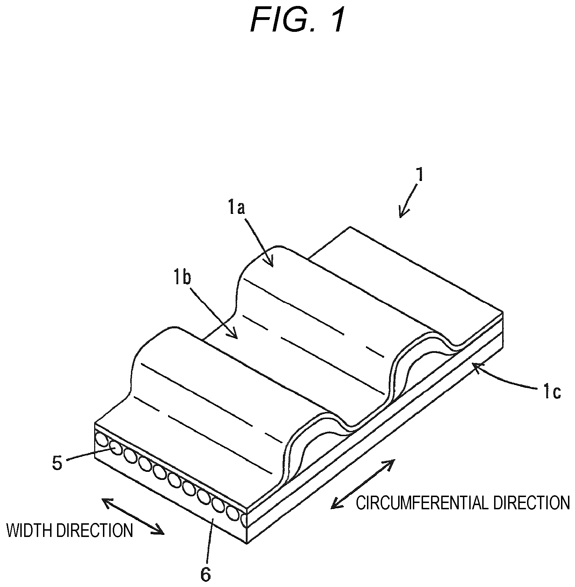

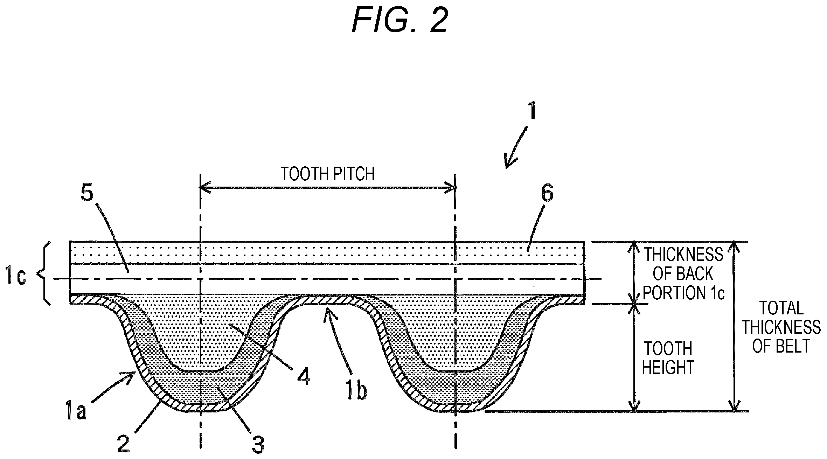

FIG. 1 is a partial cross-sectional perspective view showing an example of the toothed belt according to the present invention, and FIG. 2 is a schematic cross-sectional view of the toothed belt in FIG. 1. The toothed belt 1 in this example is an endless synchronous power-transmission belt, and includes a back portion 1c in which tension members 5 extending in a belt circumferential direction are embedded, and a plurality of tooth portions 1a provided at a predetermined interval on an inner circumferential surface of the back portion 1c and extending in a belt width direction, and a belt surface (inner circumferential surface) on a tooth portion side is constituted by a tooth fabric 2. The back portion 1c has a back rubber layer 6 disposed on an outer circumferential belt surface side of the tension member 5, and the back rubber layer 6 forms an outer circumferential belt surface. Further, the toothed belt 1 according to the present invention has a first rubber layer (front rubber layer) 3 and a second rubber layer (inner rubber layer) 4 between the tooth fabric 2 and the tension member 5 on an inner circumferential belt surface side of the tension member 5. The first rubber layer 3 is disposed on an inner circumferential belt surface along a contour of the tooth fabric 2 (in contact with the tooth fabric 2), and the second rubber layer 4 is interposed or disposed between the first rubber layer 3 and the tension member 5 (in contact with the tension member 5). The first rubber layer 3 has a higher elastic modulus (in particular, tensile elastic modulus) than the second rubber layer 4.

A flat tooth bottom portion 1b is present between adjacent tooth portions 1a, and the tooth portion 1a and the tooth bottom portion 1b are alternately formed along a belt inner circumferential direction. That is, a surface of the tooth portion 1a and the inner circumferential surface of the back portion 1c (that is, the surface of the tooth bottom portion 1b) are constituted by one continuous tooth fabric 2.

In the present application, the tooth fabric constituting the surface of the tooth portion is a constituent requirement of the tooth portion, while the tooth fabric constituting the surface of the tooth bottom portion is a constituent requirement of the back portion. In addition, each tooth fabric constituting the tooth portion is a part of a continuous tooth fabric (part of the tooth fabric 2 in FIG. 2).

In this example, the tooth portion 1a has a substantially trapezoidal cross-sectional shape in the belt circumferential direction. In addition, the tooth portion 1a having a substantially trapezoidal cross-sectional shape has a surface in the circumferential direction formed of the tooth fabric 2, and includes the first rubber layer 3 formed along the tooth fabric 2 and the second rubber layer 4 formed between the first rubber layer 3 and the tension member 5. In the tooth bottom portion 1b, a first rubber layer as a front rubber layer and a second rubber layer as an inner rubber layer are also interposed between the tooth fabric 2 and the tension member 5 (not shown). Thicknesses of the first rubber layer and the second rubber layer in the tooth bottom portion is extremely thinner than thicknesses of the first rubber layer 3 and the second rubber layer 4 in the tooth portion 1a.

The tension members 5 extend in a belt longitudinal direction (circumferential direction) and are arranged at an interval in the belt width direction. A gap between the adjacent tension members 5 may be formed of a crosslinked rubber composition constituting the back rubber layer 6 and/or the second rubber layer (particularly, a crosslinked rubber composition constituting the back rubber layer 6).

The toothed belt is used for a high load power-transmission application in an industrial machine, an internal combustion engine of an automobile, rear-wheel drive of a motorcycle, or the like. For example, in a state where the toothed belt is wound between a drive pulley (toothed pulley) and a driven pulley (toothed pulley), power is transmitted from a drive pulley side to a driven pulley side by rotation of the drive pulley.

The toothed belt according to the present invention is not limited to the forms and structures shown in FIGS. 1 and 2. For example, a cross-sectional shape of the plurality of tooth portions (cross-sectional shape of the toothed belt in the belt circumferential direction) is not limited to a substantially trapezoidal shape, and may be, for example, a semicircular shape, a semi-elliptical shape, a polygonal shape [triangular shape, square shape (rectangular shape, trapezoidal shape, or the like), or the like], as long as the tooth portions can mesh with the toothed pulley. Among them, a trapezoidal shape or a substantially trapezoidal shape is preferable from the viewpoint of synchronous power-transmission properties and the like.

In the toothed belt (inner circumferential side of tension member) according to the present invention, an area proportion of the first rubber layer is, for example, 10 area% to 80 area%, preferably 20 area% to 70 area%, and more preferably 30 area% to 60 area% with respect to a total area of the first rubber layer and the second rubber layer in a cross-sectional view in the belt circumferential direction (belt longitudinal direction). In a case where the area proportion is extremely small, the rigidity (deformation resistance) of the tooth portion may be insufficient, and conversely, in a case where the area proportion is extremely large, the bending rigidity of the belt may increase, and the bendability (flexibility) may be insufficient.

In the toothed belt according to the present invention, an average distance (tooth pitch, see FIG. 2) between centers of the tooth portions adjacent to each other in the circumferential direction may be, for example, 2 mm to 25 mm depending on the form of the toothed pulley. A numerical value of the tooth pitch also corresponds to a size of a scale of the tooth portion (length of the tooth portion in the belt circumferential direction and tooth height of the tooth portion). That is, as the tooth pitch becomes larger, the scale of the tooth portion becomes larger similarly. In particular, a tooth portion having a large scale is required in an application where a high load acts, and the tooth pitch may be 5 mm or more, preferably 8 mm or more, and more preferably 14 mm or more.

Further, an average tooth height of the tooth portion is preferably 40% to 70%, and more preferably 50% to 65% with respect to an average thickness of the entire belt.

In the present application, as shown in FIG. 2, the average tooth height of the tooth portion refers to an average height of the protruding tooth portion in the inner circumferential belt surface (average height of the tooth portions protruding from the tooth bottom portions).

[Tooth Portion]

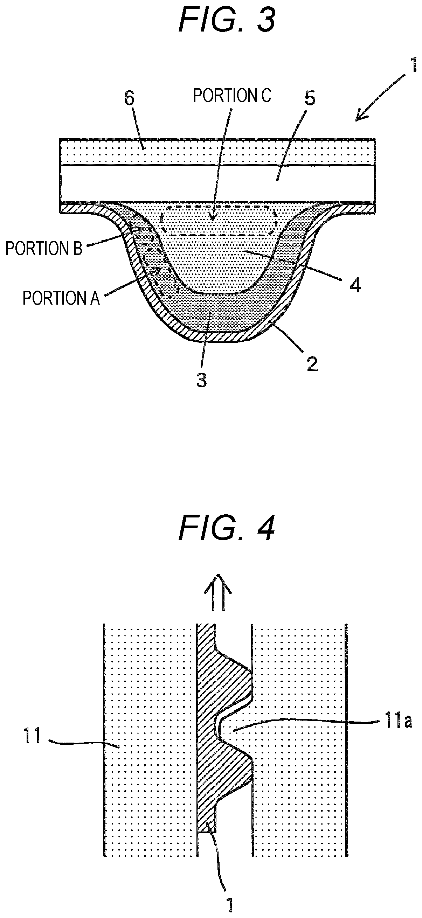

The tooth portion has a surface formed of a tooth fabric, and includes a first rubber layer disposed on a surface side (inner surface side) in contact with the tooth fabric along the contour of the tooth portion, and a second rubber layer disposed on an inner side in contact with the first rubber layer. The first rubber layer and the second rubber layer are formed of different crosslinked rubber compositions, and an elastic modulus (modulus) of the first rubber layer is relatively large and an elastic modulus (modulus) of the second rubber layer is relatively small. In the toothed belt according to the present invention, since the crosslinked rubber compositions forming the tooth portion have such a two-layer structure, both rigidity and bendability of the tooth portion can be implemented. This mechanism will be described with reference to FIG. 3. In the present application, the rubber layer forming the tooth portion refers to a rubber layer interposed between the tension member and the tooth fabric. In addition, the first rubber layer and the second rubber layer, which are rubber layers forming the tooth portion, are collectively referred to as a tooth rubber layer.

The present inventors have found that a portion that affects bendability (flexibility) inside the tooth portion is the inside of the tooth portion corresponding to the second rubber layer, in particular, a portion C located below the tension member 5. That is, the inventors have found that in a case where inside the tooth portion, in particular, the C portion is a rubber layer having high rigidity (high elastic modulus), the bendability (flexibility) decreases. Therefore, in the toothed belt according to the present invention, the second rubber layer located inside the tooth portion, particularly the second rubber layer 4 including the portion C, is adjusted to have relatively low rigidity (low elastic modulus) in order to ensure high bendability.

Further, the present inventors have found that a portion affecting the deformation resistance inside the tooth portion is the vicinity of the tooth fabric corresponding to the first rubber layer, in particular, a portion A located on a side surface of the tooth portion and a portion B located in the vicinity of the tooth bottom portion. That is, the inventors have found that in a case where the portions A and B are rubber layers having low rigidity (low elastic modulus), the deformation resistance is deteriorated. Specifically, since the portion A, which is the side surface of the tooth portion, is a portion that comes into contact with the pulley and receives the largest load (impact), it is effective that a crosslinked rubber composition of the portion A has high rigidity (high elastic modulus). On the other hand, the portion B, which is a root in the vicinity of the tooth bottom portion, is a portion where a minute crack first occurs due to repeated deformation (starting point portion leading to tooth chipping), and therefore, it is effective that a crosslinked rubber composition of the portion B has high rigidity (high elastic modulus). Therefore, in the toothed belt according to the present invention, in order to ensure the deformation resistance, the first rubber layer 3 including the portion A and the portion B is adjusted to have relatively high rigidity (high elastic modulus).

From the viewpoint of deformation resistance, at least the portion A and the portion B may be formed of a high-rigidity rubber as the tooth portion, and a top portion of the tooth portion (tooth tip portion) may not be formed of a high-rigidity rubber. On the other hand, in the toothed belt according to the present invention, the first rubber layer including the top portion is formed of a high-rigidity rubber in view of high productivity and implementation of high deformation resistance.

The tensile elastic modulus (modulus) of the first rubber layer in the belt circumferential direction can be selected from a range of about 0.6 MPa to 20 MPa, and is, for example, 2 MPa to 15 MPa (for example, 3 MPa to 12 MPa), preferably 2 MPa to 10 MPa (for example, 2 MPa to 8 MPa), more preferably 3 MPa to 8 MPa (for example, 3 MPa to 7 MPa), still more preferably 4 MPa to 7 MPa, and most preferably 4 MPa to 6 MPa. In a case where the tensile elastic modulus is extremely small, the rigidity of the tooth portion may decrease and the deformation resistance may be deteriorated, and conversely, in a case where the tensile elastic modulus is extremely large, the bendability of the belt, in particular, the winding (meshing) property to a small-diameter pulley may be deteriorated.

The tensile elastic modulus (modulus) of the second rubber layer in the belt circumferential direction is, for example, 0.5 MPa to 5 MPa, preferably 1 MPa to 4 MPa, more preferably 1.5 MPa to 3.5 MPa, and still more preferably 1.5 MPa to 3 MPa. In a case where the tensile elastic modulus is extremely small, the deformation resistance may be deteriorated, and in a case where the tensile elastic modulus is extremely large, the bendability of the belt, in particular, the winding (meshing) property to a small-diameter pulley may be deteriorated.

The tensile elastic modulus of the first rubber layer is larger than the tensile elastic modulus of the second rubber layer, and a ratio of the tensile elastic modulus of the first rubber layer to the tensile elastic modulus of the second rubber layer (tensile elastic modulus of first rubber layer/tensile elastic modulus of second rubber layer) may be 1.2 to 4, preferably 1.5 to 3.5, more preferably 1.5 to 3 (for example, 2 to 3), still more preferably 1.6 to 2.7, and most preferably 1.7 to 2.5. By setting the ratio of the tensile elastic moduli of the two layers to be in this range, the rigidity (deformation resistance) and the bendability (flexibility) of the tooth portion in a contradictory relation are balanced, and both can be implemented.

In the present application, as the tensile elastic modulus (modulus) of each of the first rubber layer and the second rubber layer, a value of "tensile stress at 1% elongation" of each rubber layer that can be measured by a method in accordance with JIS K6251 (2017) is used as an index value of the tensile elastic modulus (modulus). Specifically, it can be measured by a method described in Examples to be described later.

A compressive elastic modulus of the first rubber layer can be selected from the range of about 0.5 MPa to 2 MPa, and is, for example, 0.8 MPa to 1.6 MPa, preferably 1 MPa to 1.5 MPa, more preferably 1.2 MPa to 1.48 MPa, still more preferably 1.3 MPa to 1.45 MPa, and most preferably 1.3 MPa to 1.4 MPa. In a case where the compressive elastic modulus is extremely small, the rigidity of the tooth portion may be deteriorated and the deformation resistance may be deteriorated, and conversely, in a case where the compressive elastic modulus is extremely large, the bendability of the belt, particularly, the winding (meshing) property to a small-diameter pulley may decrease.

A compressive elastic modulus of the second rubber layer is, for example, 0.3 MPa to 1.5 MPa, preferably 0.5 MPa to 1.3 MPa, more preferably 0.7 MPa to 1.25 MPa, and still more preferably 0.8 MPa to 1.2 MPa. In a case where the compressive elastic modulus is extremely small, the deformation resistance may be deteriorated, and in a case where the tensile elastic modulus is extremely large, the bendability of the belt, particularly, the winding (meshing) property to a small-diameter pulley may be deteriorated.

The compressive elastic modulus of the first rubber layer is larger than the compressive elastic modulus of the second rubber layer, and a ratio of the compressive elastic modulus of the first rubber layer to the compressive elastic modulus of the second rubber layer (compressive elastic modulus of first rubber layer/compressive elastic modulus of second rubber layer) may be 1.05 to 1.7 (for example, 1.2 to 1.7), preferably 1.1 to 1.65 (for example, 1.25 to 1.65), more preferably 1.15 to 1.6 (for example, 1.3 to 1.6), still more preferably 1.4 to 1.58, and most preferably 1.42 to 1.5. By setting the ratio of the compressive elastic moduli of the two layers to be in this range, the rigidity (deformation resistance) and the bendability (flexibility) of the tooth portion in a contradictory relation are balanced, and both can be implemented.

In the present application, as the compressive elastic modulus of the first rubber layer and the second rubber layer, a value of "compressive stress at a compressive strain of 2%" of each rubber layer that can be measured by a method in accordance with JIS K6254 (2016) is used as an index value of the compressive elastic modulus (modulus). Specifically, it can be measured by a method described in Examples to be described later.

A shape of the first rubber layer is not particularly limited as long as it is a layer shape formed along the tooth fabric, and may be a layer shape having a uniform thickness without being limited to a layer shape having a non-uniform thickness shown in FIGS. 1 to 3 (that is, a shape in which the thickness of the layer is maximum at the top portion or the center portion of the tooth portion and decreases toward the bottom portion of the tooth portion in a cross-sectional view of the tooth portion in the belt longitudinal direction). Among these, a layer shape having a non-uniform thickness (in particular, a shape in which the thickness of the layer is maximum at the top portion or the center portion of the tooth portion and decreases toward the bottom portion of the tooth portion in a cross-sectional view of the tooth portion in the belt longitudinal direction) is preferable from the viewpoint of productivity and the like.

The area proportion of the first rubber layer in the tooth portion, with respect to the total area of the first rubber layer and the second rubber layer in a cross-sectional view in the belt longitudinal direction (circumferential direction), can be selected from a range of about 5 area% to 85 area%, and is, for example, 10 area% to 80 area%, preferably 20 area% to 70 area%, and more preferably 30 area% to 60 area%. In a case where the area proportion is extremely small, the rigidity (deformation resistance) of the tooth portion may be insufficient, and the belt runnability and the durability may also decrease, and conversely, in a case where the area proportion is extremely large, the bending rigidity of the belt may increase, the bendability (flexibility) may be insufficient, and the belt durability may decrease. In an application where the belt durability is important, the area proportion is preferably 15 area% to 65 area%, and more preferably 20 area% to 60 area%.

A shape of the second rubber layer is not limited to a substantially trapezoidal shape formed between the first rubber layer and the tension member, and may be a layer shape formed along the first rubber layer, a substantially trapezoidal shape formed between the other rubber layer formed along the first rubber layer and the tension member, or the like. Among them, from the viewpoint of improving the bendability of the tooth portion, a shape in contact with the tension member, that is, a substantially trapezoidal shape formed between the first rubber layer and the tension member or a substantially trapezoidal shape formed between the other rubber layer and the tension member is preferable, and a substantially trapezoidal shape formed between the first rubber layer and the tension member is particularly preferable.

A rubber hardness Hs of the first rubber layer (first crosslinked rubber composition constituting the first rubber layer) is, in terms of type D hardness, for example, 70 degrees to 85 degrees, preferably 75 degrees to 83 degrees, more preferably 76 degrees to 82 degrees, still more preferably 77 degrees to 82 degrees, and most preferably 77 degrees to 80 degrees. In a case where the hardness is extremely small, the rigidity of the tooth portion may decrease and the deformation resistance may be deteriorated, and conversely, in a case where the hardness is extremely large, the bendability of the belt, particularly, the winding (meshing) property to a small-diameter pulley may be deteriorated.

A rubber hardness Hs of the second rubber layer (second crosslinked rubber composition constituting the second rubber layer) is, in terms of type D hardness, for example, 60 degrees to 80 degrees (for example, 60 degrees to 66 degrees), preferably 62 degrees to 78 degrees (for example, 62 degrees to 66 degrees), more preferably 63 degrees to 75 degrees, still more preferably 63 degrees to 72 degrees, and most preferably 63 degrees to 70 degrees (particularly 63 degrees to 66 degrees). In a case where the hardness is extremely small, the deformation resistance may be deteriorated, and in a case where the hardness is extremely large, the bendability of the belt, particularly, the winding (meshing) property to a small-diameter pulley may be deteriorated.

In the present application, the type D hardness of each of the first rubber layer and the second rubber layer indicates the value Hs (type D) measured using a type D durometer in accordance with a spring type durometer hardness test specified in JIS K6253 (2012) (method for determining hardness of vulcanized rubber and thermoplastic rubber), and may be simply referred to as rubber hardness. Specifically, the hardness can be measured by a method described in Examples to be described later, and can be measured as a hardness of a rubber sheet obtained by performing a crosslinking reaction on a rubber composition for forming a belt.

Usually, a type A hardness (value measured using a type A durometer) is often used as the rubber hardness of a rubber composition, but in a case where the value measured using the type A durometer exceeds 90 degrees, it is preferable to use a type D durometer. In the toothed belt according to the present invention, a hardness of the rubber layer constituting the tooth portion is higher than a hardness of a back rubber layer to be described below, and the type A hardness exceeds 90 degrees. Therefore, the hardness of the rubber layer constituting the tooth portion is evaluated by the type D hardness.

The tooth portion may further include another rubber layer in addition to the first rubber layer and the second rubber layer as long as the effect of the present invention is not impaired. Examples of the another rubber layer include an adhesion rubber layer interposed between the tooth fabric and the first rubber layer and an intermediate rubber layer interposed between the first rubber layer and the second rubber layer. The adhesion rubber layer may be a layer for enhancing adhesiveness between the tooth fabric and the first rubber layer. In addition, the intermediate rubber layer may be a layer having a tensile elastic modulus smaller than that of the first rubber layer and larger than that of the second rubber layer. Among them, the adhesion rubber layer (third rubber layer) is preferable. A thickness of the adhesion rubber layer may be a thickness that can enhance the adhesiveness between the tooth fabric and the first rubber layer. Specifically, the thickness of the third rubber layer (adhesion rubber layer) in the top portion of the tooth portion is preferably 0.5 mm or less, and more preferably 0.3 mm or less. In a case where the thickness of the third rubber layer is extremely large, the rigidity of the tooth portion may decrease.

As the structure of the tooth portion, a structure including only an adhesion rubber layer as another layer is preferable, and a structure not including another layer, that is, a structure including a tooth fabric covering a surface in the belt circumferential direction, a first rubber layer formed along the tooth fabric, and a second rubber layer formed between the first rubber layer and the tension member is particularly preferable.

(Crosslinked Rubber Composition)

The first rubber layer and the second rubber layer may be formed of a crosslinked rubber composition commonly used as a rubber composition of a toothed belt. The crosslinked rubber composition may be a crosslinked rubber composition containing a rubber component, and by appropriately adjusting a constitution of the composition, mechanical properties such as the elastic modulus (modulus) of each layer constituting the rubber layer, particularly the first rubber layer and the second rubber layer, can be adjusted. A method for adjusting the elastic modulus (modulus) and the like is not particularly limited, and adjustment may be performed by changing the constitution and/or the type of the components constituting the composition, and from the viewpoint of convenience and the like, it is preferable to perform adjustment by changing the proportion and/or the type of a crosslinking compounding agent, short fibers, and a filler.

(A) Rubber Component

Examples of the rubber component (first rubber component and second rubber component) of the crosslinked rubber composition forming the first rubber layer and the second rubber layer include diene rubber [natural rubber (NR), isoprene rubber (IR), butadiene rubber (BR), chloroprene rubber (CR), butyl rubber (IIR), styrene-butadiene rubber (SBR), vinyl pyridine-styrene-butadiene rubber, acrylonitrile-butadiene rubber (nitrile rubber: NBR), acrylonitrile-chloroprene rubber, hydrogenated nitrile rubber (HNBR), and the like], ethylene-$\alpha$-olefin elastomer (ethylene-propylene copolymer (EPM), ethylene-propylene-diene terpolymer (EPDM), and the like), chlorosulfonated polyethylene rubber (CSM), alkylated chlorosulfonated polyethylene rubber (ACSM), epichlorohydrin rubber, acrylic rubber, silicone rubber, urethane rubber, and fluorine rubber. These rubber components may be carboxylated such as carboxylated SBR or carboxylated NBR. These rubber components may be used alone or in combination of two or more kinds thereof.

A particularly preferred rubber component is the hydrogenated nitrile rubber (HNBR), and the chloroprene rubber (CR) and the ethylene-propylene-diene terpolymer (EPDM) are also preferably used. A particularly preferred rubber component in an application where a high load acts is a rubber having high thermal aging resistance, and is particularly the hydrogenated nitrile rubber (HNBR) which may be carboxylated (hereinafter, including carboxylated hydrogenated nitrile rubber, also simply referred to as hydrogenated nitrile rubber). A proportion of the preferred rubber component in the rubber component is preferably 50 mass% or more (for example, about 80 mass% to 100 mass%), and particularly preferably 100 mass%. The hydrogenated nitrile rubber which may be carboxylated may be either a partially hydrogenated nitrile rubber or a fully hydrogenated nitrile rubber. A hydrogenation rate of the hydrogenated nitrile rubber which may be carboxylated can be selected from a range of about 50% to 100%, and may be 70% to 100%.

In the present application, the HNBR refers to a rubber in which an unsaturated bond (carbon-carbon double bond) of a nitrile rubber in the related art is chemically hydrogenated in order to prevent aging of rubber elasticity due to a recombination reaction of sulfur during thermal aging while maintaining oil resistance, which is an advantage of the nitrile rubber in the related art, thereby making the recombination reaction during thermal aging less likely to occur and improving heat resistance.

An iodine value (unit: mg/100 mg) of the HNBR is, for example, 5 to 60 (for example, 7 to 50), preferably 8 to 40 (for example, 8 to 35), and more preferably 10 to 30.

In the present application, the iodine value is an index indicating an amount of unsaturated bonds, and indicates that as the iodine value is higher, the amount of unsaturated bonds contained in a polymer molecular chain is greater. The iodine value is determined by adding excessive amount of iodine to a measurement sample to cause a complete reaction (reaction between the iodine and the unsaturated bonds), and quantifying an amount of remaining iodine by redox titration. In a case where the iodine value of the HNBR is small, a crosslinking reaction between the HNBR is not sufficient, the rigidity of the crosslinked rubber is low, and thus the deformation resistance may be deteriorated during running of the belt. On the other hand, in a case where the iodine value of the HNBR is large, the amount of unsaturated bonds becomes excessively large, and thermal degradation or oxidative degradation of the crosslinked rubber progresses, which may shorten a service life of the belt.

The rubber component preferably contains at least the hydrogenated nitrile rubber which may be carboxylated. A proportion of such a hydrogenated nitrile rubber in the rubber component may be 80 mass% to 100 mass%, preferably 90 mass% to 100 mass%, and more preferably 100 mass%.

The rubber component preferably contains a composite polymer or a polymer alloy containing a hydrogenated nitrile rubber and an unsaturated carboxylic acid metal salt (hereinafter referred to as "HNBR containing an unsaturated carboxylic acid metal salt"). In the present application, the composite polymer contained in the first rubber component is referred to as a first composite polymer, and the composite polymer contained in the second rubber component is referred to as a second composite polymer. The polymer can increase the elastic modulus (modulus) and the hardness of the tooth portion, and can prevent the deformation of the rubber and prevent the growth of cracks.

The unsaturated carboxylic acid metal salt may be a compound in which an unsaturated carboxylic acid having one or two or more carboxyl groups is ionically bonded to a metal.

Examples of the unsaturated carboxylic acid of the unsaturated carboxylic acid metal salt include monocarboxylic acids such as a (meth)acrylic acid and a crotonic acid, dicarboxylic acids such as a maleic acid, a fumaric acid, and an itaconic acid, and monoalkyl esters of these dicarboxylic acids. These unsaturated carboxylic acids may be used alone or in combination of two or more kinds thereof. A preferred unsaturated carboxylic acid is the (meth)acrylic acid.

Examples of the metal of the unsaturated carboxylic acid metal salt include polyvalent metals, for example, elements in Group 2 of the periodic table (magnesium, calcium, and the like), elements in Group 4 of the periodic table (titanium, zirconium, and the like), and elements in Group 8 to Group 14 of the periodic table (for example, iron, cobalt, nickel, copper, zinc, aluminum, tin, lead, and the like). These metals may be used alone or in combination of two or more kinds thereof. Preferred metals are elements in Group 2 of the periodic table (such as magnesium) and elements in Group 12 of the periodic table (such as zinc).

Preferred examples of the unsaturated carboxylic acid metal salt include zinc (meth)acrylate and magnesium (meth)acrylate. The unsaturated carboxylic acid metal salts may be used alone or in combination of two or more kinds thereof.

A mass ratio of the hydrogenated nitrile rubber to the unsaturated carboxylic acid metal salt can be selected from a range (hydrogenated nitrile rubber/unsaturated carboxylic acid metal salt) of about 100/80 to 100/180, preferably 100/85 to 100/175, and more preferably 100/90 to 100/175. In a case where a proportion of the unsaturated carboxylic acid metal salt is extremely small, the elastic modulus (modulus) and the hardness of the crosslinked rubber composition (or the tooth portion) may decrease, and in a case where the proportion is extremely large, the processability and the bendability of the belt may be deteriorated.

The HNBR containing an unsaturated carboxylic acid metal salt may be a commercially available product. For example, a product (for example, trade name "Zeoforte (ZSC)" manufactured by Zeon Corporation) obtained by finely dispersing zinc methacrylate as an unsaturated carboxylic acid metal salt in the HNBR at a high degree can be used.

In addition, the HNBR containing an unsaturated carboxylic acid metal salt is preferably used as a mixture with a hydrogenated nitrile rubber (HNBR) containing no unsaturated carboxylic acid metal salt. The mass ratio of the hydrogenated nitrile rubber to the unsaturated carboxylic acid metal salt may be adjusted by mixing a commercially available HNBR containing an unsaturated carboxylic acid metal salt and a commercially available hydrogenated nitrile rubber. The elastic modulus (modulus) and the hardness may be adjusted by changing a mixing ratio of both.

A proportion of the HNBR containing an unsaturated carboxylic acid metal salt in the rubber component may be 10 mass% or more, preferably 30 mass% or more, more preferably 50 mass% or more, still more preferably 80 mass% or more, and most preferably 90 mass% or more, and may be 100 mass%. In particular, the proportion of the HNBR containing an unsaturated carboxylic acid metal salt is preferably 80 mass% or more (particularly 100 mass%) in the rubber component of the first rubber layer (first rubber component), and is preferably 30 mass% or more (particularly 100 mass%) in the rubber component of the second rubber layer (second rubber component). The proportion may be a proportion in the trade name "Zeoforte (ZSC)".

As another rubber component combined with the HNBR containing an unsaturated carboxylic acid metal salt, at least one selected from the group consisting of HNBR, EPDM, and CR is preferable. A proportion of another rubber component in the rubber component is, for example, 70 mass% or less, preferably 50 mass% or less, more preferably 30 mass% or less, and most preferably 10 mass% or less.

In order to ensure adhesiveness between layers, the first rubber layer and the second rubber layer preferably contain the same series or the same kind of rubber component, more preferably the same kind of rubber component, and still more preferably the same rubber component.

(B) Filling Compounding Agent

The crosslinked rubber composition (first crosslinked rubber composition and second crosslinked rubber composition) may further contain a filling compounding agent (filler). Examples of the filling compounding agent (first filling compounding agent and second filling compounding agent) include reinforcing inorganic fillers, non-reinforcing fillers, and short fibers.

Examples of the reinforcing inorganic filler (first reinforcing inorganic filler and second reinforcing inorganic filler) include carbon black and silica. These reinforcing inorganic fillers may be used alone or in combination of two or more kinds thereof. The reinforcing inorganic filler may be in a powder form.

An average particle diameter (average primary particle diameter) of the carbon black is, for example, 5 nm to 200 nm, preferably 10 nm to 150 nm, more preferably 20 nm to 100 nm, and still more preferably 30 nm to 80 nm. An iodine adsorption amount of the carbon black is, for example, 5 mg/g to 200 mg/g, preferably 10 mg/g to 150 mg/g, more preferably 15 mg/g to 100 mg/g, and still more preferably 20 mg/g to 80 mg/g.

Examples of the silica include dry silica, wet silica, and surface-treated silica. In addition, silica can also be classified into, for example, dry white carbon, wet white carbon, colloidal silica, and precipitated silica according to a producing method. These silicas may be used alone or in combination of two or more kinds thereof. Among these silicas, silica having a surface silanol group (anhydrous silicic acid or hydrated silicic acid) is preferable, and a hydrous silicic acid having many surface silanol groups has strong chemical bonding force with the rubber component.

An average particle diameter (average primary particle diameter) of the silica is, for example, 1 nm to 500 nm, preferably 3 nm to 300 nm, more preferably 5 nm to 100 nm, and still more preferably 10 nm to 50 nm.

In addition, a nitrogen adsorption specific surface area according to the BET method of silica is, for example, 50 $m^2/g$ to 400 $m^2/g$, preferably 100 $m^2/g$ to 300 $m^2/g$, and more preferably 150 $m^2/g$ to 200 $m^2/g$.

In the present application, an average particle diameter of the reinforcing inorganic filler can be calculated as an arithmetic average particle diameter of an appropriate number of samples (for example, 50 samples) by image analysis of an electron micrograph including a scanning electron micrograph.

A proportion of the reinforcing inorganic filler with respect to 100 parts by mass of the rubber component may be 10 parts by mass or less, preferably 5 parts by mass or less, more preferably 1 part by mass or less, and still more preferably 0 parts by mass. In a case where the reinforcing inorganic filler is used as necessary, the proportion of the reinforcing inorganic filler with respect to 100 parts by mass of the rubber component may be, for example, 0.1 parts by mass to 8 parts by mass, preferably 0.5 parts by mass to 5 parts by mass, and more preferably 1 part by mass to 3 parts by mass. In a case where the proportion of the reinforcing inorganic filler is extremely large, the heat generation of the rubber composition increases and the heat resistance is deteriorated, and thus cracks and tooth chipping may occur due to thermal degradation.

Examples of the non-reinforcing filler include a polyvalent metal carbonate (such as calcium carbonate and magnesium carbonate), a polyvalent metal hydroxide (such as aluminum hydroxide), a polyvalent metal sulfate (such as barium sulfate), a silicate (natural or synthetic silicate in which part of silicon is substituted with polyvalent metal atoms, such as aluminum silicate, magnesium silicate, and aluminum magnesium silicate; a mineral containing the silicate as a main component, such as clay containing the aluminum silicate, and a silicate mineral such as talc and mica containing the magnesium silicate), lithopone, and silica sand. These non-reinforcing fillers may be used alone or in combination of two or more kinds thereof.

A preferred non-reinforcing filler is at least one selected from a calcium carbonate, a magnesium carbonate, an aluminum hydroxide, a barium sulfate, and a silicate [silicate such as aluminum silicate, magnesium silicate, and aluminum magnesium silicate; a silicate mineral (talc, clay, mica, or the like)]. Further, from the viewpoint that an effect of improving the processability of the belt and the dispersibility of the compounding agent is increased and poor dispersion of the compounding agent hardly occurs, the non-reinforcing filler preferably contains at least one selected from the calcium carbonate, the magnesium silicate, talc containing the magnesium silicate, the aluminum silicate, and clay containing the aluminum silicate, and particularly preferably contains the calcium carbonate. As the non-reinforcing filler, a powdery filler commercially available as a rubber filler can be used.

An average particle diameter (average primary particle diameter) of the non-reinforcing filler can be selected from a range of, for example, 0.01 $\mu$m to 25 $\mu$m (for example, 0.2 $\mu$m to 20 $\mu$m), and preferably 0.5 $\mu$m to 17 $\mu$m (for example, 1 $\mu$m to 15 $\mu$m). The average particle diameter (average primary particle diameter) of the non-reinforcing filler may be, for example, 0.01 $\mu$m to 3 $\mu$m (for example, 0.02 $\mu$m to 2 $\mu$m), preferably 0.05 $\mu$m to 1.5 $\mu$m (particularly 0.1 $\mu$m to 1 $\mu$m), or may be relatively large. In addition, the average particle diameter (average primary particle diameter) of the non-reinforcing filler may be, for example, 0.2 $\mu$m to 5 $\mu$m (for example, 0.3 $\mu$m to 3 $\mu$m), and preferably 0.5 $\mu$m to 2.5 $\mu$m (particularly 1 $\mu$m to 2 $\mu$m). Depending on the type of the non-reinforcing filler, for example, the magnesium silicate or a mineral thereof, the non-reinforcing filler may be cracked or crushed in a process of kneading with the rubber component or the like. The average particle diameter of the non-reinforcing filler having such crushability or friability may be an average particle diameter before kneading with the rubber component or the like. The non-reinforcing filler may usually have an average particle diameter in the above range (for example, 0.1 $\mu$m to 10 $\mu$m, preferably 0.5 $\mu$m to 5 $\mu$m, and more preferably 1 $\mu$m to 3 $\mu$m) in each crosslinked rubber composition.

In the present application, the average particle diameter of the non-reinforcing filler can be measured as a volume average particle diameter using a laser diffraction particle size distribution analyzer. In addition, an average particle diameter of a nanometer-sized filler can be calculated as an arithmetic average particle diameter of an appropriate number of samples (for example, 50 samples) by image analysis of an electron micrograph including a scanning electron micrograph.

A proportion of the non-reinforcing filler with respect to 100 parts by mass of the rubber component is, for example, 70 parts by mass or less, preferably 40 parts by mass or less, and more preferably 30 parts by mass or less. In a case where the non-reinforcing filler is used as necessary, the proportion of the non-reinforcing filler with respect to 100 parts by mass of the rubber component may be, for example, 3 parts by mass to 70 parts by mass, preferably 5 parts by mass to 40 parts by mass, and more preferably 10 parts by mass to 30 parts by mass. In a case where the proportion of the non-reinforcing filler is extremely large, the dispersibility of the compounding agent may be poor.

Short fibers can be oriented (arranged) in a predetermined direction in a process of preparing an uncrosslinked rubber sheet by rolling a rubber composition kneaded with a Banbury mixer or the like with a roll or a calendar. In the rubber layer constituting the tooth portion, an orientation direction of the short fibers is preferably arranged in the belt circumferential direction. Further, the short fibers are preferably oriented along the contour of the tooth portion on a side close to the tooth fabric and arranged such that the short fibers are oriented substantially parallel to the tension member as the short fibers approach the tension member.

Examples of the short fibers include synthetic fibers such as polyolefin fibers (polyethylene fibers, polypropylene fibers, and the like), polyamide fibers [aliphatic polyamide fibers (nylon fibers) such as polyamide 6 fibers, polyamide 66 fibers, and polyamide 46 fibers, aramid fibers, and the like], polyester fibers [polyalkylene arylate fibers (for example, $C_{2-4}$ alkylene $C_{8-14}$ arylate fibers such as polyethylene terephthalate (PET) fibers, polytrimethylene terephthalate (PTT) fibers, polybutylene terephthalate (PBT) fibers, and polyethylene naphthalate (PEN) fibers); fully aromatic polyester fibers such as polyarylate fibers and liquid crystal polyester fibers, and the like], vinylon fibers, polyvinyl alcohol fibers, and polyparaphenylene benzobisoxazole (PBO) fibers; natural fibers such as cotton, hemp, and wool; regenerated cellulose fibers such as rayon; cellulose ester fibers; and inorganic fibers such as carbon fibers and glass fibers. These short fibers may be used alone or in combination of two or more kinds thereof. In particular, fibers having a high elastic modulus (modulus) such as polyamide fibers, PBO fibers, glass fibers, and carbon fibers can be suitably used, and polyamide fibers such as aliphatic polyamide fibers (nylon fibers) and aramid fibers, and PBO fibers are more preferable.

An average fiber diameter of the short fibers is, for example, 1 $\mu$m to 100 $\mu$m (for example, 3 $\mu$m to 70 $\mu$m), preferably 5 $\mu$m to 50 $\mu$m (for example, 7 $\mu$m to 30 $\mu$m), and more preferably 10 $\mu$m to 25 $\mu$m (particularly 12 $\mu$m to 20 $\mu$m). An average fiber length of the short fibers is, for example, 0.3 mm to 10 mm (for example, 0.5 mm to 7 mm), and preferably 1 mm to 5 mm (particularly 2 mm to 4 mm). In a case where the average fiber diameter of the short fibers is extremely small or the average fiber length is extremely long, the short fibers may not be uniformly dispersed, and in a case where the average fiber diameter of the short fibers is extremely large or the average fiber length is extremely short, the mechanical properties of each rubber layer may be deteriorated.

In a case where the short fibers are added, the elastic modulus (modulus) and the hardness of the crosslinked rubber composition can be increased, but minute cracks are likely to occur at an interface between the rubber component and the short fibers. Therefore, it is necessary to adjust a compounding amount of the short fibers appropriately. A proportion of the short fibers with respect to 100 parts by mass of the rubber component is 10 parts by mass or less, preferably 7 parts by mass or less, and more preferably 5 parts by mass or less.

In addition, the short fibers are preferably subjected to a commonly-used adhesion treatment (or a surface treatment), and an adhesive component is preferably attached to at least a part of the surface of the short fibers. By such adhesion treatment, the adhesiveness between the short fibers and the rubber component is improved, and occurrence of minute cracks starting from an interface between the short fibers and the rubber component can be prevented. Examples of the adhesion treatment include treatments using an adhesive component such as an epoxy compound (or an epoxy resin), a polyisocyanate, a silane coupling agent, and resorcin-formalin-latex (RFL).

A proportion of the filling compounding agent with respect to 100 parts by mass of the rubber component is, for example, 3 parts by mass to 70 parts by mass, preferably 5 parts by mass to 50 parts by mass, more preferably 10 parts by mass to 40 parts by mass, and still more preferably 20 parts by mass to 30 parts by mass.

(C) Crosslinking Compounding Agent

The rubber composition contains a crosslinking agent (vulcanizing agent) for crosslinking the rubber component, and contains a co-crosslinking agent, a crosslinking aid (vulcanization aid), a crosslinking accelerator (vulcanization accelerator), a crosslinking retardant (vulcanization retardant), and the like as necessary. Among these, the crosslinking compounding agent (first crosslinking compounding agent and second crosslinking compounding agent) preferably contains at least a crosslinking agent and a co-crosslinking agent (crosslinking aid), and a combination of the crosslinking agent and the co-crosslinking agent is particularly preferable.

As the crosslinking agent (first crosslinking agent and second crosslinking agent), commonly-used components can be used according to the type of the rubber component, and examples thereof include an organic peroxide, a sulfur-based crosslinking agent, and a metal oxide.

Examples of the organic peroxide (first organic peroxide and second organic peroxide) include di-t-butyl peroxide, dicumyl peroxide, t-butyl cumyl peroxide, 1,1-t-butyl peroxy-3,3,5-trimethylcyclohexane, 1,3-bis(t-butyl peroxyisopropyl) benzene, 2,5-dimethyl-2,5-di(t-butyl peroxy)hexane, 2,5-dimethyl-2,5-di(t-butyl peroxy)hexyne-3,1,3-bis(t-butyl peroxy-di-isopropyl)benzene, 2,5-di-methyl-2,5-di(benzoyl peroxy)hexane, t-butyl peroxybenzoate, and t-butyl peroxy-2-ethylhexyl carbonate. These organic peroxides may be used alone or in combination of two or more kinds thereof.

Examples of the sulfur-based crosslinking agent include powdered sulfur, precipitated sulfur, colloidal sulfur, insoluble sulfur, highly dispersible sulfur, and sulfur chloride (such as sulfur monochloride and sulfur dichloride). These sulfur-based crosslinking agents may be used alone or in combination of two or more kinds thereof.

Examples of the metal oxide include magnesium oxide, zinc oxide, and lead oxide. These metal oxides may be used alone or in combination of two or more kinds thereof.

The crosslinking agent may be appropriately selected according to the type of the rubber component, and is preferably an organic peroxide or a metal oxide, and particularly preferably an organic peroxide.

A proportion of the crosslinking agent with respect to 100 parts by mass of the rubber component is, for example, 1 part by mass to 20 parts by mass, preferably 3 parts by mass to 15 parts by mass, and more preferably 5 parts by mass to 10 parts by mass. In a case where the proportion of the crosslinking agent is extremely small, the elastic modulus (modulus) and the hardness of the rubber composition decrease, and conversely, in a case where the proportion is extremely large, the bendability of the belt is deteriorated.

A proportion of the organic peroxide with respect to 100 parts by mass of the rubber component can be selected from the range of about 0.5 parts by mass to 20 parts by mass (for example, 1 part by mass to 10 parts by mass), and is usually 1 part by mass to 5 parts by mass (for example, 1.2 parts by mass to 4.5 parts by mass), preferably 1.5 parts by mass to 4 parts by mass, and more preferably 2 parts by mass to 3 parts by mass. A proportion of the first organic peroxide in the first rubber layer with respect to 100 parts by mass of the first rubber component is, for example, 1 part by mass to 20 parts by mass, preferably 1.5 parts by mass to 10 parts by mass, and more preferably 1.5 parts by mass to 4 parts by mass. A proportion of the second organic peroxide in the second rubber layer with respect to 100 parts by mass of the second rubber component is, for example, 0.5 parts by mass to 5 parts by mass, preferably 0.8 parts by mass to 4 parts by mass, and more preferably 1 part by mass to 3 parts by mass.

Examples of the co-crosslinking agent (crosslinking aid or co-vulcanization agent co-agent) include a known crosslinking aid, for example, polyfunctional (iso)cyanurate [for example, triallyl isocyanurate (TAIC) or triallyl cyanurate (TAC)], polydiene (for example, 1,2-polybutadiene), metal salts of unsaturated carboxylic acids [for example, (meth)acrylic acid polyvalent metal salts such as zinc (meth)acrylate and magnesium (meth)acrylate], oximes (for example, quinonedioxime), guanidines (for example, diphenyl guanidine), polyfunctional (meth)acrylate [for example, alkanediol di(meth)acrylate such as ethylene glycol di(meth)acrylate and butanediol di(meth)acrylate, trimethylolpropane tri(meth)acrylate, alkane polyol poly(meth)acrylate such as pentaerythritol tetra(meth)acrylate], bismaleimide (aliphatic bismaleimide, for example, alkylene bismaleimide such as N,N'-1,2-ethylenedimaleimide, N,N'-hexamethylene bismaleimide, and 1,6'-bismaleimide-(2,2,4-trimethyl)cyclohexane; and arene bismaleimide or aromatic bismaleimide, for example, N,N'-m-phenylene dimaleimide, 4-methyl-1,3-phenylene dimaleimide, 4,4'-diphenylmethane dimaleimide, 2,2-bis[4-(4-maleimide phenoxy)phenyl]propane, 4,4'-diphenylether dimaleimide, 4,4'-diphenylsulfonyl dimaleimide, and 1,3-bis(3-maleimide phenoxy)benzene. These co-crosslinking agents may be used alone or in combination of two or more kinds thereof. Among these co-crosslinking agents, polyfunctional (iso)cyanurate, polyfunctional (meth)acrylate, and bismaleimide (arene bismaleimide or aromatic bismaleimide such as N,N'-m-phenylene-dimaleimide) are preferable, and bismaleimide is particularly preferable. By the addition of the co-crosslinking agent (for example, bismaleimide), the degree of crosslinking can be increased and the elastic modulus can be improved.

A proportion of the co-crosslinking agent (crosslinking aid) such as bismaleimide with respect to 100 parts by mass of the rubber component is, in terms of solid content, for example, 0.2 parts by mass to 40 parts by mass, preferably 0.5 parts by mass to 30 parts by mass, more preferably 0.8 parts by mass to 20 parts by mass, and still more preferably 1 part by mass to 15 parts by mass. A proportion of the co-crosslinking agent (first co-crosslinking agent) in the first rubber layer with respect to 100 parts by mass of the first rubber component is, for example, 1 part by mass to 40 parts by mass, preferably 2 parts by mass to 30 parts by mass (for example, 5 parts by mass to 20 parts by mass), more preferably 2.5 parts by mass to 18 parts by mass (for example, 8 parts by mass to 15 parts by mass), still more preferably 3 parts by mass to 14 parts by mass (for example, 4 parts by mass to 12 parts by mass), and most preferably 6 parts by mass to 11 parts by mass (for example, 5 parts by mass to 7 parts by mass). A proportion of the co-crosslinking agent (second co-crosslinking agent) in the second rubber layer with respect to 100 parts by mass of the second rubber component is, for example, 0.2 parts by mass to 25 parts by mass, preferably 0.5 parts by mass to 10 parts by mass, more preferably 0.7 parts by mass to 7 parts by mass (for example, 0.8 parts by mass to 5 parts by mass), still more preferably 0.8 parts by mass to 4 parts by mass (for example, 0.8 parts by mass to 3 parts by mass), and most preferably 0.8 parts by mass to 2 parts by mass.

A proportion of the crosslinking compounding agent with respect to 100 parts by mass of the rubber component is, in terms of solid content, for example, 0.2 parts by mass to 50 parts by mass, preferably 0.5 parts by mass to 40 parts by mass, more preferably 1 part by mass to 30 parts by mass, and still more preferably 2 parts by mass to 20 parts by mass. A proportion of the crosslinking compounding agent (first crosslinking compounding agent) in the first rubber layer with respect to 100 parts by mass of the first rubber component is, for example, 1 part by mass to 40 parts by mass, preferably 5 parts by mass to 20 parts by mass, and more preferably 10 parts by mass to 15 parts by mass. A proportion of the crosslinking compounding agent (second crosslinking compounding agent) in the second rubber layer with respect to 100 parts by mass of the second rubber component is, for example, 0.3 parts by mass to 25 parts by mass, preferably 0.5 parts by mass to 10 parts by mass, and more preferably 1 part by mass to 5 parts by mass.

(D) Other Compounding Agents

The crosslinked rubber composition may further contain a commonly-used additive used for the rubber composition of the toothed belt. Examples of the commonly-used additive include metal oxides (calcium oxide, barium oxide, iron oxide, copper oxide, titanium oxide, aluminum oxide, and the like), softeners (oils such as paraffin oil and naphthenic oil, and the like), processing agents or processing aids (stearic acid or metal salts thereof, wax, paraffin, fatty acid amide, and the like), plasticizers [aliphatic carboxylic acid plasticizers (adipic acid ester plasticizers, sebacic acid ester plasticizers, and the like), aromatic carboxylic acid ester plasticizers (phthalic acid ester plasticizers, trimellitic acid ester plasticizers, and the like), oxycarboxylic acid ester plasticizers, phosphoric acid ester plasticizers, ether plasticizers, ether ester plasticizers, and the like], anti-aging agents (antioxidants, thermal aging resisters, anti-flex-cracking agents, antiozonants, and the like), colorants, tackifiers, plasticizers, coupling agents (silane coupling agents and the like), stabilizers (ultraviolet absorbers, thermal stabilizers, and the like), flame retardants, and antistatic agents. In addition, the crosslinked rubber composition may contain an adhesiveness improving agent (resorcin-formaldehyde co-condensate, amino resin, and the like) as necessary. These additives may be used alone or in combination of two or more kinds thereof.

(Preferable Compounding Aspect of First Rubber Layer and Second Rubber Layer)

The elastic modulus (modulus) of each of the first rubber layer and the second rubber layer can be adjusted by changing a predetermined component that affects the elastic modulus of the rubber layer and a quantitative proportion thereof. For example, a content of at least one component selected from the filling compounding agent (filler, short fiber), the crosslinking compounding agent [crosslinking agent, co-crosslinking agent (bismaleimide and the like)], and the like may be adjusted by increasing a content thereof in the first rubber layer more than that in the second rubber layer. In particular, in the toothed belt according to the present invention, the elastic moduli (tensile elastic moduli) of the first rubber layer and the second rubber layer can be suitably adjusted in a balanced manner by adjusting the content of the co-crosslinking agent (in particular, bismaleimide), and both the rigidity (deformation resistance) and the bendability (flexibility) of the tooth portion in a contradictory relation can be implemented.

Further, in order to have a high elastic modulus for obtaining the rigidity of the tooth portion which can withstand the use under a condition where a higher load acts and to implement both rigidity (deformation resistance) and bendability (flexibility) of the tooth portion in a contradictory relation in the toothed belt according to the present invention, the following compounding is a preferred aspect.

In the preferred aspect, in the first rubber layer, the first rubber component may contain 80 mass% or more of HNBR containing an unsaturated carboxylic acid metal salt, and with respect to 100 parts by mass of the first rubber component, a proportion of the first reinforcing inorganic filler may be 10 parts by mass or less, a proportion of the first short fibers may be 5 parts by mass or less, a proportion of the bismaleimide as the first co-crosslinking agent may be 1 part by mass to 40 parts by mass, and a proportion of the organic peroxide as the first crosslinking agent may be 1 part by mass to 20 parts by mass; and in the second rubber layer, the second rubber component may contain 30 mass% or more of HNBR containing an unsaturated carboxylic acid metal salt, and with respect to 100 parts by mass of the second rubber component, a proportion of the second reinforcing inorganic filler may be 10 parts by mass or less, a proportion of the second short fibers may be 5 parts by mass or less, a proportion of the bismaleimide as the second co-crosslinking agent may be 0.2 parts by mass to 25 parts by mass, and a proportion of the organic peroxide as the second crosslinking agent may be 0.5 parts by mass to 5 parts by mass.

(Tooth Fabric)

The tooth fabric constituting the inner circumferential belt surface (surfaces of the tooth portion and the tooth bottom portion) may be made of, for example, a fabric such as a woven fabric, a knitted fabric, or a nonwoven fabric. In general, the woven fabric (canvas) is commonly used, and the woven fabric is formed by weaving warps extending in the belt width direction and wefts extending in the belt circumferential direction. A weave structure of the woven fabric is not particularly limited as long as it is a structure in which warps and wefts regularly intersect in vertical and horizontal directions, and may be any of plain weave, twill weave, and satin weave, and may be a weave structure in which these structures are combined. A preferred woven fabric has twill weave and satin weave structures.

Examples of fibers forming the wefts and the warps of the tooth fabric include polyphenylene ether fibers, polyetheretherketone fibers, polyethersulfone fibers, and polyurethane fibers in addition to the same fibers as the short fibers. These fibers may be used alone or in combination of two or more kinds thereof. Among these fibers, organic fibers are widely used, and cellulose fibers such as cotton and rayon, polyester fibers (PET fibers and the like), polyamide fibers (aliphatic polyamide fibers such as polyamide 66 fibers, aramid fibers, and the like), PBO fibers, and fluororesin fibers [polytetrafluoroethylene (PTFE) fibers and the like] are preferable. In addition, composite yarns of those fibers and stretchable elastic yarns (for example, a stretchable polyurethane elastic yarn such as spandex made of polyurethane, a textured yarn subjected to stretch processing (for example, woolly processing or crimping processing)) are also preferable.

A form of the warp and the weft is not particularly limited, and may be a monofilament yarn which is a single long fiber, a multifilament yarn in which filaments (long fibers) are aligned or twisted, a spun yarn in which short fibers are twisted, or the like. The multifilament yarn or the spun yarn may be a twisted yarn or a blended yarn using a plurality of types of fibers. The weft preferably contains the stretchable elastic yarn, and the warp usually does not contain the elastic yarn from the viewpoint of weaving properties. In order to ensure stretchability of the tooth fabric in the belt circumferential direction, the weft including the elastic yarn extends in the belt circumferential direction, and the warp extends in the belt width direction.

An average diameter of the fibers (or yarns) is, for example, 1 $\mu$m to 100 $\mu$m (for example, 3 $\mu$m to 50 $\mu$m), preferably 5 $\mu$m to 30 $\mu$m, and more preferably 7 $\mu$m to 25 $\mu$m. Regarding an average fiber diameter (thickness) of the yarn (twisted yarn), the average fiber diameter of the weft may be, for example, about 100 dtex to 1,000 dtex (particularly, 300 dtex to 700 dtex), and the average fiber diameter of the warp may be, for example, about 50 dtex to 500 dtex (particularly, 100 dtex to 300 dtex). A density (threads/cm) of the weft may be, for example, about 5 to 50 (particularly about 10 to 30), and a density (threads/cm) of the warp may be, for example, about 10 to 300 (particularly about 20 to 100).

The woven fabric may have a multiple weave structure (such as a double weave structure), and in a weave structure including warps and wefts, at least some of the wefts may be made of fibers (or low-friction fibers) having a low friction coefficient such as fluororesin-containing fibers (such as composite yarns including fibers made of a fluororesin such as PTFE). For example, the warp may be made of a polyamide fiber such as nylon 66, a polyester fiber, or the like, and the weft may be made of a single fiber made of the fluororesin; a composite yarn of the fiber made of the fluororesin and a second fiber such as a polyamide fiber or a polyurethane fiber (elastic yarn); or a composite yarn of the composite yarn and a second composite yarn made of a plurality of second fibers.

In this aspect, among the wefts, it is preferable to use a fluorine-based fiber (for example, a PTFE fiber) having a low friction coefficient as a weft located (exposed) on a surface side of the tooth fabric (side meshing with the toothed pulley) in order to reduce friction between the tooth fabric and the toothed pulley. On the other hand, by using a fiber other than the fluorine-based fiber for the weft located on a back surface side of the tooth fabric (adhesion side to the tooth portion), it is possible to increase the adhesive force between the tooth fabric and the rubber constituting the tooth portion. With the tooth fabric in this aspect, friction caused by meshing between the tooth fabric and the toothed pulley can be reduced, and noise generation can be prevented.

In addition, in a case where the fluorine-based fiber is used, a low-melting-point fiber having a melting point that melts at a crosslinking (vulcanization) temperature of the tooth portion and the back portion, which are made of rubber as a base material, is preferably arranged around the fluorine-based fiber. Specifically, the form of the composite yarn containing the fluorine-based fiber includes a form in which the fluorine-based fiber and the low-melting-point fiber are twisted, or a form in which the fluorine-based fiber is covered with the low-melting-point fiber. Crosslinking (vulcanization) conditions of the tooth portion and the back portion are not particularly limited, and are generally a crosslinking (vulcanization) temperature of 100°C to 200°C and crosslinking (vulcanization) time of about 1 minute to 5 hours.

In an aspect in which the low-melting-point fiber is arranged around the fluorine-based fiber, the low-melting-point fiber melts during crosslinking (vulcanization) of the tooth portion and the back portion, flows into the fibers constituting the tooth fabric, and then is cooled to the melting point or less, whereby the low-melting-point fiber is crystallized. Therefore, at the time of meshing with the toothed pulley or disengagement from the toothed pulley, the fluorine-based fiber is prevented from being cut and scattered due to impact or abrasion generated on a surface of the tooth fabric. In a case where the weft according to the above aspect is used as the tooth fabric of the toothed belt, the tooth portion and the back portion are protected for a longer period by the action, and thus it is possible to prevent tooth chipping of the belt, and it is possible to extend the service life at the time of running with a high load.

An average thickness of the tooth fabric (tooth fabric in the toothed belt) is, for example, 0.1 mm to 2 mm, and preferably 0.2 mm to 1.5 mm. An average thickness of the tooth fabric (tooth fabric before forming) as a raw material is, for example, 0.5 mm to 3 mm, and preferably 0.75 mm to 2.5 mm.

In order to enhance adhesiveness to the first rubber layer, the fabric forming the tooth fabric may be subjected to an adhesion treatment. Examples of the adhesion treatment include a method in which the fabric is immersed in an RFL treatment liquid and then heated and dried; a method of being treated with an epoxy compound or an isocyanate compound; a method in which a rubber composition is dissolved in an organic solvent to form a rubber cement, the fabric is immersed in the rubber cement, and then heated and dried; and a method in which these treatment methods are combined. These methods may be performed alone or in combination, and the processing order and the number of times of processing are not limited. For example, the fabric may be pretreated with an epoxy compound or an isocyanate compound, immersed in the RFL treatment liquid, and then heated and dried.

Further, for the purpose of enhancing the adhesiveness between the tooth fabric and the first rubber layer, an uncrosslinked rubber sheet obtained by rolling the rubber composition may be laminated on a back surface side (side adhered to the first rubber layer) of the fabric forming the tooth fabric. The rubber composition (third crosslinked rubber composition) can be appropriately selected from the crosslinked rubber compositions exemplified as the crosslinked rubber compositions for forming the first rubber layer and the second rubber layer, and may be a commonly-used adhesion rubber composition. The uncrosslinked rubber sheet made of the rubber composition may form a third rubber layer (adhesion rubber layer) interposed between the tooth fabric and the first rubber layer in the toothed belt. The fabric subjected to the above adhesion treatment is referred to as a tooth fabric precursor.

[Tooth Bottom Portion]

The tooth fabric constitutes the surface of the tooth portion and also constitutes the surface of the back portion on a tooth portion side (surface of tooth bottom portion).

In the back portion corresponding to the tooth bottom portion, the first rubber layer and the second rubber layer may be interposed between the tooth fabric and the tension member, but only the first rubber layer may be interposed, or the tooth fabric and the tension member may be in contact with each other without interposing the first rubber layer and the second rubber layer. When the first rubber layer is interposed or when the first rubber layer and the second rubber layer are interposed in the back portion corresponding to the tooth bottom portion, the thickness of the first rubber layer and the thicknesses of the first rubber layer and the second rubber layer are formed to be thinner than that of the tooth portion in either case.

[Back Rubber Layer]

The back portion has the tooth portion and the tooth bottom portion formed on an inner circumferential surface thereof, and has the back rubber layer forming an outer circumferential belt surface on an outer circumferential surface side thereof. Further, the back rubber layer is made of a crosslinked rubber composition (fourth crosslinked rubber composition). In the aspect shown in FIGS. 1 to 3, the other surface (back surface of the belt) on which the tooth portion is not formed is not covered with a fabric (woven fabric, knitted fabric, unwoven fabric, or the like), but may be covered as necessary. The fabric can be selected from the fabrics exemplified as the tooth fabric, including a preferred mode thereof.

(Fourth Crosslinked Rubber Composition)

A hardness of the fourth crosslinked rubber composition is preferably lower than a hardness of the first crosslinked rubber composition and a hardness of the second crosslinked rubber composition constituting the tooth portion from the viewpoint of reducing the bending rigidity of the belt and ensuring the bendability (winding property to the pulley) and the bending fatigue resistance.

Specifically, the rubber hardness Hs of the fourth crosslinked rubber composition is, for example, 80 degrees to 89 degrees in terms of type A hardness. By adjusting the type A hardness of the back rubber layer to the above range, the bending rigidity of the back portion is lowered, and excellent bending fatigue resistance is obtained. In a case where the type A hardness of the fourth crosslinked rubber composition is extremely low, cracks may occur in the back portion due to collision of foreign matter or the like, and on the other hand, in a case where the type A hardness of the fourth crosslinked rubber composition is extremely high, the bending fatigue resistance is deteriorated, and cracks may occur in the back portion.

In the present application, the type A hardness is the hardness of the surface of the back rubber layer, and can be measured using a type A durometer in accordance with a spring durometer hardness test specified in JIS K6253 (2012).

The fourth crosslinked rubber composition is not particularly limited as long as the adhesiveness between the back rubber layer and the tooth portions is not impaired, can be selected from, for example, the crosslinked rubber compositions exemplified as the crosslinked rubber compositions of the first rubber layer and the second rubber layer, and can be appropriately adjusted so that the rubber hardness falls within the above range.

From the viewpoint of improving the adhesiveness between the back rubber layer and the tooth portion, the rubber component (fourth rubber component) in the fourth crosslinked rubber composition preferably contains the same series or the same type of rubber component as the second rubber layer (inner rubber layer), and more preferably the same type of rubber component.

The fourth rubber component preferably contains the HNBR containing an unsaturated carboxylic acid metal salt. A proportion of the HNBR containing an unsaturated carboxylic acid metal salt in the fourth rubber component may be 5 mass% or more, for example, 5 mass% to 50 mass%, preferably 10 mass% to 30 mass%, and more preferably 15 mass% to 25 mass%. The fourth rubber component may be a combination of HNBR containing no unsaturated carboxylic acid metal salt and HNBR containing an unsaturated carboxylic acid metal salt.

The filling compounding agent may be a reinforcing inorganic filler (fourth reinforcing inorganic filler), and is preferably a combination of carbon black and silica. A proportion of carbon black with respect to 100 parts by mass of silica is, for example, 1 part by mass to 50 parts by mass, preferably 2 parts by mass to 30 parts by mass, and more preferably 3 parts by mass to 10 parts by mass. A proportion of the fourth reinforcing inorganic filler with respect to 100 parts by mass of the fourth rubber component is, for example, 10 parts by mass to 100 parts by mass, preferably 20 parts by mass to 80 parts by mass, and more preferably 30 parts by mass to 50 parts by mass.

The crosslinking agent (fourth crosslinking agent) may be a combination of an organic peroxide (fourth organic peroxide) and a metal oxide (fourth metal oxide). A proportion of the fourth organic peroxide with respect to 100 parts by mass of the fourth rubber component is, for example, 0.5 parts by mass to 5 parts by mass, preferably 0.8 parts by mass to 4 parts by mass, and more preferably 1 part by mass to 3 parts by mass. A proportion of the fourth metal oxide with respect to 100 parts by mass of the fourth rubber component is, for example, 1 part by mass to 15 parts by mass, preferably 2 parts by mass to 10 parts by mass, and more preferably 3 parts by mass to 8 parts by mass.

The co-crosslinking agent (fourth co-crosslinking agent) may be bismaleimides. A proportion of the fourth co-crosslinking agent with respect to 100 parts by mass of the fourth rubber component is, for example, 0.2 parts by mass to 10 parts by mass, preferably 0.5 parts by mass to 5 parts by mass, and more preferably 1 part by mass to 3 parts by mass.

The fourth crosslinked rubber composition may contain a plasticizer. The plasticizer can be selected from the plasticizers exemplified in the first rubber layer and the second rubber layer. The plasticizer may be used alone or in combination of two or more kinds thereof. Among the plasticizers, ether ester-based plasticizers are preferable.

A proportion of the plasticizer with respect to 100 parts by mass of the fourth rubber component is, for example, 1 part by mass to 50 parts by mass, preferably 2 parts by mass to 30 parts by mass, more preferably 3 parts by mass to 20 parts by mass, and still more preferably 5 parts by mass to 15 parts by mass.

An average thickness of the back rubber layer is, for example, 0.3 mm to 3 mm, and preferably 0.5 mm to 2 mm. An average thickness of the back portion (average thickness of the back portion in the tooth bottom portion) is, for example, 1 mm to 5 mm, and preferably 1.5 mm to 4 mm.

[Tension Member]

The tension members extending along the belt circumferential direction are embedded in the back portion on the inner circumferential side of the back rubber layer. The tension member acts as a tension body, and can improve running stability and strength of the toothed belt. Further, in the back portion, the tension members, which are twisted cords extending along the belt circumferential direction, are usually embedded at a predetermined interval in the belt width direction, and a plurality of the tension members may be arranged parallel to the longitudinal direction, but are usually embedded in a spiral form from the viewpoint of productivity. In a case of the spiral arrangement, an angle of the tension member with respect to the belt longitudinal direction may be, for example, 5° or less, and more preferably closer to 0° from the viewpoint of belt running performance.

More specifically, as shown in FIG. 1, the tension members may be embedded at a predetermined interval (or pitch) (or at equal intervals) from one end to the other end of the back portion in the belt width direction. An interval (spinning pitch), which is a distance between centers of adjacent tension members, is larger than a tension member diameter, and is, for example, 0.5 mm to 3.5 mm, preferably 0.8 mm to 3 mm, and more preferably 1 mm to 2.8 mm depending on a diameter of the tension member.

The tension member may be made of twisted cords obtained by twisting a plurality of strands or multifilament yarns. Among those, the twisted cord of strands is preferable, and one strand may be formed by bundling filaments (long fibers). A thickness of the filament forming the twisted cord, the number of bundled filaments, the number of strands, and a twist configuration of the twist method are not particularly limited.

The twisted cords forming the tension member may be single-twisted cords, plied cords, or Lang-twisted cords. By employing a Lang-twisted cord as the tension member in which a primary-twist direction and a secondary-twist direction are the same, the bending rigidity is lower than that of a plied cord or a single-twisted cord, and excellent bending fatigue resistance is obtained.

Fibers forming the tension member are not particularly limited, and examples thereof include synthetic fibers such as polyester fibers (polyalkylene arylate fibers and polyparaphenylene naphthalate fibers), polybenzoxazole fibers, acrylic fibers, and polyamide fibers (aliphatic polyamide fibers and aramid fibers), and inorganic fibers such as glass fibers, carbon fibers, and metal fibers (steel fibers). These fibers may be used alone or in combination of two or more kinds thereof. From the viewpoint of low elongation and high strength, synthetic fibers such as polyester fibers and polyamide fibers, inorganic fibers such as glass fibers and carbon fibers, and the like are widely used as the fibers forming the tension member.

In particular, in an application where a high load acts, a multifilament yarn made of carbon fibers is preferably used. As the carbon fibers, for example, trade name "Torayca" manufactured by Toray Industries, Inc. is used.

The multifilament yarn made of carbon fibers can be selected from multifilament yarns having different numbers of filaments, such as 6K and 12K. 6K represents a multifilament yarn having 6,000 filaments, and 12K represents a multifilament yarn having 12,000 filaments. Fineness of the 6K multifilament yarn is about 400 tex, and fineness of the 12K multifilament yarn is about 800 tex.

In a case where the fineness of the multifilament yarn made of carbon fibers is more than 1,000 tex, the bending fatigue resistance may be deteriorated. On the other hand, in a case where the fineness of the multifilament yarn made of the carbon fibers is less than 300 tex, the material cost increases, and the number of primarily-twisted yarns required to prepare a tension member having sufficient tensile strength increases, resulting in an increase in workload.

In an embodiment of the toothed belt according to the present invention, a carbon fiber cord (12K-1/0) obtained by single-twisting one 12K multifilament yarn (fineness of about 800 tex) is used as the tension member. Alternatively, a Lang-twisted carbon fiber cord (12K-1/4) obtained by primarily twisting one 12K multifilament yarn (fineness of about 800 tex) to prepare a primarily-twisted yarn, and secondarily twisting four prepared primarily-twisted yarns together may be used as the tension member. The "12K-1/0" represents a twisted cord obtained by single-twisting one 12K multifilament yarn, and the "12K-1/4" represents a twisted cord obtained by primarily twisting one 12K multifilament yarn to prepare a primarily-twisted yarn, and secondarily twisting four prepared primarily-twisted yarns together. Similarly, for example, "12K-1/3" represents a twisted cord obtained by primarily twisting one 12K multifilament yarn to prepare a primarily-twisted yarn, and secondarily twisting three prepared primarily-twisted yarns together, and "12K-4/0" represents a twisted cord obtained by single-twisting four 12K multifilament yarns together.

The tension member may be subjected to an adhesion treatment in order to enhance adhesiveness to the fourth crosslinked rubber composition. A method of the adhesion treatment may be, for example, a method in which the twisted cord is immersed in a resorcin-formalin-latex treatment liquid (RFL treatment liquid) and then heated and dried to form a uniform adhesive layer on a surface of the twisted cord. The RFL treatment liquid is a mixture obtained by mixing an initial condensate of resorcin and formalin in a latex, and the latex may be, for example, chloroprene rubber, styrene-butadiene-vinylpyridine terpolymer (VP latex), nitrile rubber, or hydrogenated nitrile rubber. Further, the method of the adhesion treatment may be a method of performing pretreatment with an epoxy compound or an isocyanate compound and then performing treatment with an RFL treatment liquid.

An average diameter (average wire diameter) of the twisted cord (or the tension member) is, for example, 0.2 mm to 2.5 mm, preferably 0.5 mm to 2.3 mm, and more preferably 0.7 mm to 2.2 mm, and is particularly preferably 0.8 mm to 2.1 mm in an application where a high load acts. In a case where the tension member diameter is extremely small, elongation of the tension member increases, which may cause tooth chipping (chipping of the tooth portion). In a case where the tension member diameter is extremely large, the bending fatigue resistance of the tension member is decreased, which may cause tension member cutting. In an embodiment according to the present invention, the tension member diameter is adjusted to 1.1 mm.

[Method for Manufacturing Toothed Belt]

The toothed belt according to the present invention may be prepared by, for example, the following method (preforming method). First, a tooth fabric precursor forming a tooth fabric, an uncrosslinked rubber sheet forming a plurality of rubber layers, for example, an uncrosslinked rubber sheet forming a first rubber layer (front rubber layer), an uncrosslinked rubber sheet forming a second rubber layer (inner rubber layer), and an unvulcanized rubber sheet forming a back rubber layer are prepared.

(Preforming Step)

Next, the tooth fabric precursor forming a tooth fabric is wound around an outer circumferential surface of a cylindrical mold having a plurality of groove portions (recessed strips) corresponding to tooth portions of the toothed belt. Subsequently, a laminate is formed by sequentially winding the uncrosslinked rubber sheet forming a first rubber layer (front rubber layer) and the uncrosslinked rubber sheet forming a second rubber layer (inner rubber layer) on an outer circumference thereof, the laminate is pressurized from an outer circumferential side while being heated to a temperature (for example, about 70°C to 90°C) at which a rubber composition is softened by a predetermined device, and the rubber composition of the uncrosslinked rubber sheet and the tooth fabric precursor are press-fitted into the groove portions (recessed stripes) of the cylindrical mold to form tooth portions, thereby obtaining a preformed body in a semi-crosslinked state. In the process of press-fitting to form the tooth portions, the tooth fabric is stretched along a contour of the tooth portions and disposed on the outermost surface, and a layer structure is formed in which the first rubber layer is disposed along the contour of the tooth portions on an inner side thereof and the second rubber layer is disposed on a further inner side thereof.

A method for obtaining the preformed body in a semi-crosslinked state may be a method in which a flat press mold (flat mold) having a plurality of groove portions (recessed strips) corresponding to the tooth portions is used instead of the cylindrical mold, and the rubber composition of the uncrosslinked rubber sheet and the tooth fabric precursor are press-fitted into the flat groove portions (recessed strips) by hot pressing according to the above-described procedure to form the tooth portions. In this method, after the preformed body is removed from the flat mold, the preformed body is wound around the cylindrical mold having a plurality of groove portions (recessed strips) corresponding to the tooth portions and attached (tooth portions and groove portions being fitted), and the processing proceeds to the next step.

(Crosslinking Forming Step)

The twisted cord constituting the tension member is spirally wound around an outer circumferential surface of the obtained preformed body at a predetermined pitch (at a predetermined pitch in an axial direction of the cylindrical mold). Further, the uncrosslinked rubber sheet forming the back rubber layer is wound around the outer circumference side of the twisted cord to form an uncrosslinked belt formed body (uncrosslinked laminate).

Subsequently, in a state where the uncrosslinked belt formed body is disposed on an outer circumference of the cylindrical mold, a rubber jacket which is a vapor blocking material is further covered on the outside of the uncrosslinked belt formed body. Subsequently, the belt formed body and the cylindrical mold covered with the jacket are accommodated in a crosslinking forming device such as a vulcanization can. Further, in a case where the belt formed body is heated and pressurized inside the crosslinking forming device, a desired shape is formed, and respective constituent members are bonded and integrally cured by a crosslinking reaction of the uncrosslinked and semi-crosslinked rubber components contained in the belt formed body to form a sleeve-shaped crosslinked formed body (crosslinked belt sleeve).

(Cutting Step)

Finally, the crosslinked belt sleeve removed from the cylindrical mold is cut to a predetermined width, thereby obtaining a plurality of toothed belts.

EXAMPLES

Hereinafter, the present invention will be described in more detail based on Examples, but the present invention is not limited to these Examples.

[Rubber Composition]

Table 1: Rubber composition (part by mass)

| Rubber composition | Tooth portion | | | | | | | | | | | Back portion |
|---|---|---|---|---|---|---|---|---|---|---|---|---|
| | R1 | R2 | R3 | R4 | R5 | R6 | R7 | R8 | R9 | R10 | R11 | R12 |
| HNBR | 15 | - | - | - | - | - | - | - | - | - | - | 80 |
| HNBR containing unsaturated carboxylic acid metal salt | 85 | 100 | 100 | 100 | 100 | 100 | 100 | 100 | 100 | 100 | 100 | 20 |
| Aramid short fiber | 2 | 2 | 2 | 2 | 2 | 2 | 2 | 2 | 2 | 2 | 2 | - |
| Stearic acid | 1 | 1 | 1 | 1 | 1 | 1 | 1 | 1 | 1 | 1 | 1 | 1 |
| Carbon black SRF | 2 | 2 | 2 | 2 | 2 | 2 | 2 | 2 | 2 | - | - | 2 |
| Silica | - | - | - | - | - | - | - | - | - | - | - | 40 |
| Calcium carbonate | 20 | 20 | 20 | 20 | 20 | 20 | 20 | 20 | 20 | 20 | 20 | - |
| Zinc oxide | 5 | 5 | 5 | 5 | 5 | 5 | 5 | 5 | 5 | 5 | 5 | 2 |
| Anti-aging agent | 2 | 2 | 2 | 2 | 2 | 2 | 2 | 2 | 2 | 2 | 2 | 2 |
| Organic peroxide | 2 | 2 | 2 | 2 | 2 | 2 | 2 | 2 | 2 | 2 | 2 | 2 |
| Co-crosslinking agent | 1 | 1 | 3 | 6 | 8 | 11 | 14 | 20 | 25 | 1 | 6 | 2 |
| Plasticizer | - | - | - | - | - | - | -- | - | - | - | - | 10 |
| Total | 135 | 135 | 137 | 140 | 142 | 145 | 148 | 154 | 159 | 133 | 138 | 161 |
| Hardness (type D) | 61 | 65 | 70 | 77 | 78 | 80 | 82 | 83 | 85 | 64 | 76 | 27 |
| Tensile elastic modulus (MPa) [grain parallel direction] | 1.0 | 2.3 | 3.1 | 4.0 | 5.0 | 5.7 | 7.0 | 9.2 | 12.0 | 2.3 | 3.9 | 0.30 |
| Compressive elastic modulus (MPa) [grain parallel direction] | 0.80 | 0.93 | 1.20 | 1.33 | 1.35 | 1.38 | 1.45 | 1.52 | 1.55 | 0.92 | 1.31 | 0.50 |

[Materials Used for Rubber Composition]

HNBR: "Zetpol 2010" manufactured by Zeon Corporation, iodine value of 11 mg/100 mg

HNBR containing an unsaturated carboxylic acid metal salt: "Zeoforte ZSC2295CX" manufactured by Zeon Corporation, base HNBR: unsaturated carboxylic acid metal salt (mass ratio) = 100:110, iodine value of base HNBR is 28 mg/100 mg

Aramid short fiber: "Conex" manufactured by Teijin Limited, average fiber length of 3 mm, average fiber diameter of 14 μm

Stearic acid: stearic acid "Tsubaki" manufactured by NOF Corporation

Carbon black SRF: "Seast S" manufactured by Tokai Carbon Co., Ltd., average particle diameter of 66 nm, iodine adsorption amount of 26 mg/g

Silica: "Ultrasil VN-3" manufactured by Evonik Degussa Japan Co., Ltd., specific surface area of 155 $m^2/g$ to 195 $m^2/g$

Calcium carbonate: "Super #1500" manufactured by Maruo Calcium Co., Ltd, average particle diameter of 1.5 μm

Zinc oxide: "Zinc oxide (type II)" manufactured by Sakai Chemical Industry Co., Ltd., average particle diameter of 0.55 μm

Anti-aging agent: p,p'-dioctyldiphenylamine. "Nonflex OD3" manufactured by Seiko Chemical Co., Ltd.

Organic peroxide: 1,3-bis(t-butylperoxyisopropyl)benzene, theoretical active oxygen content of 9.45%

Co-crosslinking agent: N,N'-m-phenylene dimaleimide, "Vulnoc PM" manufactured by Ouchi Shinko Chemical Industrial Co., Ltd.

Plasticizer: "Adeka Cizer RS 700" manufactured by ADEKA Corporation

[Tension Member]

A carbon fiber cord (12K-1/0, tensile elastic modulus of 230 GPa) obtained by single-twisting one 12K multifilament yarn ["Torayca T700SC-12000" manufactured by Toray Industries, Inc., single yarn fineness of 0.67 dtex, total fineness of 800 tex] was prepared and subjected to an adhesion treatment with an HNBR overcoat treatment agent to obtain a tension member having a tension member diameter of 1.1 mm.

[Tooth Fabric and Treatment of Tooth Fabric]

A woven fabric shown in Table 2 was subjected to an immersion treatment using an RFL treatment liquid and rubber cement to prepare a tooth fabric precursor. Specifically, in the RFL treatment, two types of RFL treatment liquids (RFL1 and RFL2) shown in Table 3 were used, and the immersion treatment was performed in the order of RFL1 and RFL2. Further, in the rubber cement treatment, two types of rubber cement (rubber cement 1 and rubber cement 2) shown in Table 4 were used, and the immersion treatment was performed in order of the rubber cement 1 and the rubber cement 2.

Table 2: Woven fabric configuration

| Tooth fabric configuration | |
|---|---|
| Weave configuration | Weft double color double weave front 1/3 twill weave, back 2/2 twill weave |
| Warp | Nylon 66 |
| Weft-1 | PTFE fiber ※1<br><br>polyester fiber ※2<br>urethane elastic yarn |
| Weft-2 | Nylon 66<br>urethane elastic yarn |

※ 1: PTFE fiber ["TOYOFLON of 1,330 dtex" manufactured by Toray Industries, Inc.]

※ 2: Polyester fiber ["CORNETTA" manufactured by Unitika, Ltd., core-sheath type composite fiber having core portion melting point of 256°C and sheath portion melting point of 160°C]

Table 3: Compounding of RFL (part by mass)

| Compounding | RFL1 | RFL2 |
|---|---|---|
| Hydrogenated nitrile rubber latex (40 mass%) | 100 | 100 |
| RF condensate dispersion liquid (20 mass%) | 50 | 25 |
| Aqueous solution of NaOH (10 mass%) | 0 | 2 |
| Aqueous dispersion of maleimide compound (50 mass%) | 0 | 20 |
| Water | 110 | 110 |

Table 4: Compounding of rubber cement (part by mass)

| Compounding | Rubber cement 1 | Rubber cement 2 |
|---|---|---|
| Compounding for hydrogenated nitrile rubber cement rubber | 5 | 15 |

(continued)

| Compounding | Rubber cement 1 | Rubber cement 2 |
|---|---|---|
| Polymeric MDI | 5 | 0 |
| Methyl ethyl ketone | 90 | 85 |

[Preparation of Uncrosslinked Rubber Sheet]

As an uncrosslinked rubber sheet for forming the tooth portion and the back portion (back rubber layer), an uncrosslinked rubber sheet was prepared by kneading rubber compositions compounded as shown in Table 1 using a Banbury mixer, and rolling the obtained kneaded rubber to a predetermined thickness using a calendar roll. The short fibers contained in the uncrosslinked rubber sheet were oriented in a rolling direction. In the present application, the rubber compositions are denoted by R1 to R12.

[Hardness (Type D)]

The uncrosslinked rubber sheet was press-heated at a temperature of 165°C for 30 minutes to prepare a crosslinked rubber sheet (100 mm × 100 mm × 2 mm thickness). A laminate obtained by laminating three crosslinked rubber sheets was used as a sample to measure a hardness (type D) of the crosslinked rubber sheet using a type D durometer in accordance with a spring type durometer hardness test specified in JIS K6253 (2012) (method for determining hardness of vulcanized rubber and thermoplastic rubber).

[Tensile Elastic Modulus]

The uncrosslinked rubber sheet was press-heated at a temperature of 165°C for 30 minutes to prepare a crosslinked rubber sheet (100 mm × 100 mm × 2 mm thickness), and a test piece punched into a dumbbell shape (No. 5 shape) was prepared in accordance with JIS K6251 (2017). In the sample containing short fibers, a dumbbell-shaped test piece was collected such that an arrangement direction of the short fibers (grain parallel direction) was the tensile direction. Further, both ends of the test piece were gripped by chucks (grippers), the test piece was tensioned at a speed of 500 mm/min, and a value (tensile stress at 1% elongation) obtained by dividing a tensile force at the time of providing a predetermined elongation (1%) by an initial cross-sectional area of the test piece was defined as a tensile elastic modulus (modulus). The tensile elastic modulus of each rubber composition is shown in Table 5.

[Compressive Elastic Modulus]

The uncrosslinked rubber was press-heated at a temperature of 165°C for 30 minutes to prepare a crosslinked rubber test piece (columnar shape; thickness of 25 mm, diameter of 17.8 mm) in accordance with the JIS K6254 (2016) C method. In a sample containing short fibers, the short fibers were arranged so that an arrangement direction (grain parallel direction) thereof was a circumferential direction of the columnar test piece. Further, an operation of sandwiching the test piece by metal plates coated with silicone oil, compressing the test piece at a speed of 10 mm/min until the test piece reached a strain of 5%, and immediately removing a force at a speed of 10 mm/min was continuously repeated three times to record a relation between a compressive force and strain (compressive force-deformation curve) four times in total. Further, the fourth curve is used define a value (compressive stress at a compressive strain of 2%) obtained by dividing, by an initial cross-sectional area of the test piece, the compressive force at a compressive strain of 2% with respect to a thickness of the test piece before the first compression using a rising point of the curve as an origin as the compressive elastic modulus (modulus).

[Manufacturing of Toothed Belt]

In Examples and Comparative Examples, as described below, a toothed belt having a total thickness of 5.6 mm, a tooth shape of G8M, a tooth height (including a tooth fabric) of 3.5 mm, a tooth pitch of 8 mm, the number of teeth of 140, a circumferential length of 1,120 mm, and a width of 12 mm was manufactured using the preforming method described in the present embodiment.

Regarding the toothed belts manufactured in the respective Examples and Comparative Examples, a configuration (layer structure) of the tooth portions and the rubber compositions used in the respective rubber layers are shown in Table 5.

(Example 1)

A tooth fabric precursor forming a tooth fabric, an uncrosslinked rubber sheet (R6, sheet thickness of 0.20 mm) forming a first rubber layer, and an uncrosslinked rubber sheet (R2, sheet thickness of 1.50 mm) forming a second rubber layer were laminated in this order on a press mold (flat mold) having a plurality of groove portions (recessed strips) corresponding to tooth portions of a toothed belt, followed by pressing at a temperature of 90°C and a press pressure (surface pressure) of 20.2 MPa for 160 seconds to prepare a preformed body in a semi-crosslinked state.
Next, the preformed body was wound around a cylindrical mold and attached (tooth portions and groove portions being fitted), and twisted cords constituting a tension member was spirally spun on an outer circumferential surface of the preformed body (tension of 150 N/thread to 250 N/thread, spinning pitch of 1.25 mm, spinning speed of 1.5m/s). Further, an uncrosslinked rubber sheet (R12, sheet thickness of 0.90 mm) forming a back rubber layer was wound around an outer circumference side thereof to form an uncrosslinked belt formed body (uncrosslinked laminate).
Subsequently, crosslinking forming was performed for 40 minutes using a vulcanization can under conditions of a heating temperature of 179°C and a vapor pressure of 0.83 MPa to prepare a crosslinked formed body (crosslinked belt sleeve).
Finally, the crosslinked belt sleeve removed from the cylindrical mold was cut to a width of 12 mm to obtain a toothed belt.

(Example 2)

A toothed belt was prepared in the same manner as in Example 1 except that the thickness of the uncrosslinked rubber sheet forming the first rubber layer was 0.35 mm and the thickness of the uncrosslinked rubber sheet forming the second rubber layer was 1.35 mm.

(Example 3)

A toothed belt was prepared in the same manner as in Example 1 except that the thickness of the uncrosslinked rubber sheet forming the first rubber layer was 0.70 mm and the thickness of the uncrosslinked rubber sheet forming the second rubber layer was 1.00 mm.

(Example 4)

A toothed belt was prepared in the same manner as in Example 1 except that the thickness of the uncrosslinked rubber sheet forming the first rubber layer was 1.00 mm and the thickness of the uncrosslinked rubber sheet forming the second rubber layer was 0.70 mm.

(Example 5)

A toothed belt was prepared in the same manner as in Example 1 except that the thickness of the uncrosslinked rubber sheet forming the first rubber layer was 1.35 mm and the thickness of the uncrosslinked rubber sheet forming the second rubber layer was 0.35 mm.

(Comparative Example 1)

A toothed belt was prepared in the same manner as in Example 1 except that the uncrosslinked rubber sheet forming the tooth portion was only one type of R2 (sheet thickness of 1.70 mm).

(Comparative Example 2)

A toothed belt was prepared in the same manner as in Example 1 except that the uncrosslinked rubber sheet forming the tooth portion was only one type of R6 (sheet thickness of 1.70 mm).

(Comparative Example 3)

A toothed belt was prepared in the same manner as in Example 1 except that the uncrosslinked rubber sheet forming the first rubber layer was R2 (sheet thickness of 0.85 mm) and the uncrosslinked rubber sheet forming the second rubber layer was R6 (sheet thickness of 0.85 mm).

(Example 6)

A toothed belt was prepared in the same manner as in Example 3 except that the uncrosslinked rubber sheet forming the first rubber layer was R3 (sheet thickness of 0.70 mm).

(Example 7)

A toothed belt was prepared in the same manner as in Example 3 except that the uncrosslinked rubber sheet forming the first rubber layer was R4 (sheet thickness of 0.70 mm).

(Example 8)

A toothed belt was prepared in the same manner as in Example 3 except that the uncrosslinked rubber sheet forming the first rubber layer was R7 (sheet thickness of 0.70 mm).

(Example 9)

A toothed belt was prepared in the same manner as in Example 3 except that the uncrosslinked rubber sheet forming the first rubber layer was R8 (sheet thickness of 0.70 mm).

(Example 10)

A toothed belt was prepared in the same manner as in Example 3 except that the uncrosslinked rubber sheet forming the first rubber layer was R9 (sheet thickness of 0.70 mm).

(Example 11)

A toothed belt was prepared in the same manner as in Example 1 except that the uncrosslinked rubber sheet forming the first rubber layer was R3 (sheet thickness of 0.20 mm).

(Example 12)

A toothed belt was prepared in the same manner as in Example 4 except that the uncrosslinked rubber sheet forming the first rubber layer was R7 (sheet thickness of 1.00 mm).

(Example 13)

A toothed belt was prepared in the same manner as in Example 5 except that the uncrosslinked rubber sheet forming the first rubber layer was R7 (sheet thickness of 1.35 mm).

(Example 14)

A toothed belt was prepared in the same manner as in Example 3 except that the uncrosslinked rubber sheet forming the first rubber layer was R3 (sheet thickness of 0.70 mm) and the uncrosslinked rubber sheet forming the second rubber layer was R1 (sheet thickness of 1.00 mm).

(Example 15)

A toothed belt was prepared in the same manner as in Example 3 except that the uncrosslinked rubber sheet forming the first rubber layer was R6 (sheet thickness of 0.70 mm) and the uncrosslinked rubber sheet forming the second rubber layer was R3 (sheet thickness of 1.00 mm).

(Example 16)

A toothed belt was prepared in the same manner as in Example 3 except that the uncrosslinked rubber sheet forming the first rubber layer was R8 (sheet thickness of 0.70 mm) and the uncrosslinked rubber sheet forming the second rubber layer was R3 (sheet thickness of 1.00 mm).

(Example 17)

A toothed belt was prepared in the same manner as in Example 3 except that the uncrosslinked rubber sheet forming the first rubber layer was R7 (sheet thickness of 0.70 mm) and the uncrosslinked rubber sheet forming the second rubber layer was R4 (sheet thickness of 1.00 mm).

(Example 18)

A toothed belt was prepared in the same manner as in Example 3 except that the uncrosslinked rubber sheet forming the first rubber layer was R9 (sheet thickness of 0.70 mm) and the uncrosslinked rubber sheet forming the second rubber layer was R4 (sheet thickness of 1.00 mm).

(Example 19)

A toothed belt was prepared in the same manner as in Example 3 except that the uncrosslinked rubber sheet forming the first rubber layer was R7 (sheet thickness of 0.70 mm) and the uncrosslinked rubber sheet forming the second rubber layer was R5 (sheet thickness of 1.00 mm).

(Example 20)

A toothed belt was prepared in the same manner as in Example 3 except that the uncrosslinked rubber sheet forming the first rubber layer was R9 (sheet thickness of 0.70 mm) and the uncrosslinked rubber sheet forming the second rubber layer was R5 (sheet thickness of 1.00 mm).

(Example 21)

A toothed belt was prepared in the same manner as in Example 3 except that the uncrosslinked rubber sheet forming the first rubber layer was R9 (sheet thickness of 0.70 mm) and the uncrosslinked rubber sheet forming the second rubber layer was R1 (sheet thickness of 1.00 mm).

(Example 22)

A toothed belt was prepared in the same manner as in Example 3 except that the uncrosslinked rubber sheet forming the first rubber layer was R11 (sheet thickness of 0.70 mm) and the uncrosslinked rubber sheet forming the second rubber layer was R10 (sheet thickness of 1.00 mm).

[Bending Rigidity Test]

Regarding each toothed belt, a bending strength $E_r$ of the toothed belt was obtained by a bending test using an Olsen type bending tester in accordance with JIS K7106 (1995), and the obtained $E_r$ was multiplied by a second moment of area $I_r$ of the toothed belt calculated by the following equation (1) to calculate a bending rigidity $E_r I_r$ of the toothed belt by the following equation (2). Here, the toothed belt test piece had a length of 80 mm, a width of 12 mm, a thickness of 2.1 mm, a span length S of 25.4 mm, and a moment M of a pendulum at a load scale of 100% of 0.343 N·m. In addition, the test was performed under conditions of a temperature of 23°C $\pm$ 2°C and a humidity of 65% $\pm$ 5%. It is shown that as a value of the bending rigidity is smaller, the bendability (flexibility) is better. Determination criteria of the bending rigidity is shown below.

$$I_r = b \times h^3/12 \ (1)$$

[in the formula, $I_r$: second moment of area (mm$^4$) of test piece, b: width (mm) of test piece, and h: thickness (mm) of test piece]

$$E_r I_r = [(S \times M)/300] \times [N/(D \times 0.01745)] \ (2)$$

[in the formula, $E_r$: bending strength (N/mm$^2$) of test piece, $I_r$: second moment of area (mm$^4$) of test piece, S: span length (mm), M: pendulum moment (N·m), D: bending angle (degree) (1 degree = $\pi$/180 = 0.01745 radians), N: reading (%) of load scale plate corresponding to bending angle (degree)].

(Determination Criteria of Bending Rigidity)

a: bending rigidity of less than 700 MPa (acceptable)
b: bending rigidity of 700 MPa or more and less than 800 MPa (acceptable)
c: bending rigidity of 800 MPa or more (unacceptable)

[Tooth Rigidity Test]

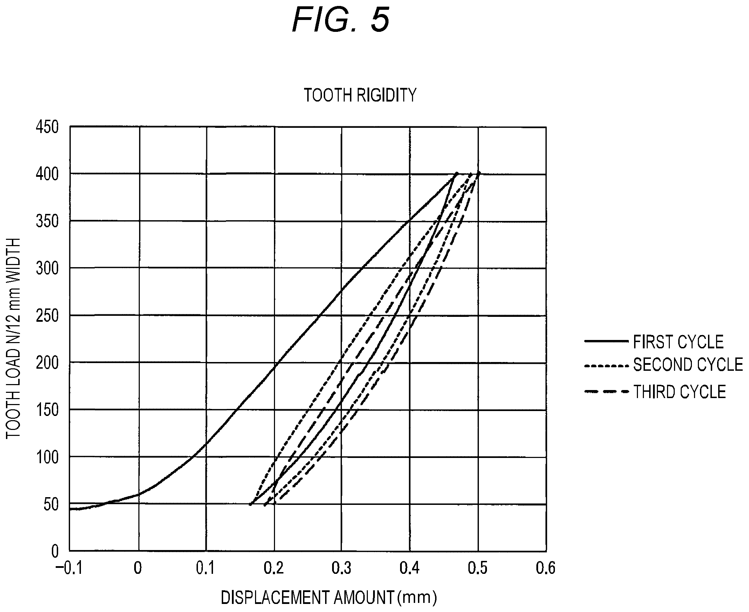

As shown in FIG. 4, a tooth load relative to a displacement at the time of pulling the toothed belt 1 by an autograph at a speed of 1 mm/min in a state where the tooth portion of the toothed belt 1 is hooked on a protruding portion 11a of a tooth shearing device (rigid body assumed to be a tooth shape of a toothed pulley) 11 and one tooth is pressed at a constant pressure (tightening torque of 0.98 cNm/1 mm width) was defined and evaluated as the rigidity (tooth rigidity) of the tooth portion. A value of the tooth load relative to the displacement was obtained by linear approximation of a section of a tooth load of 50 N/12 mm width to 400 N/12 mm width as shown in FIG. 5 using a third cycle in which the numerical value was stable. It is shown that as the value of the tooth rigidity is larger, the rigidity (deformation resistance) of the tooth portion is better. Determination criteria of the tooth rigidity is shown below.

(Determination Criteria of Tooth Rigidity)

a: tooth rigidity of 1,300 N/mm or more (acceptable)
b: tooth rigidity of 1,100 N/mm or more and less than 1,300 N/mm (acceptable)
c: tooth rigidity of less than 1,100 N/mm (unacceptable)

[Jumping Test]

A biaxial torque measurement tester was used, a toothed belt was wound between a drive pulley (number of teeth of 22) and a driven pulley (number of teeth of 22), and a distance between shafts of the pulleys was adjusted so that a belt tension was 230 N. Then, while the drive pulley was rotated at 1,800 rpm to run the belt, a load on the driven pulley was continuously increased, and a load torque applied to the drive pulley when jumping (tooth skipping) occurred was measured as a jumping torque. A numerical value of the jumping torque is used as an index of the jumping property, and as a jumping torque value is larger, it can be said to be an excellent toothed belt in which the tooth skipping was less likely to occur.
Regarding a value of the jumping torque, the jumping torque value (101 N·m) in Comparative Example 1 in which the tooth portion is formed of only one rubber layer having a small elastic modulus is regarded as 1.00, and the jumping torque values of the respective Examples and Comparative Examples are shown in terms of relative values. It is shown that when the value is 1.00 or less, a reinforcement effect on the toothed belt of Comparative Example 1 does not appear, and it is shown that when the value exceeds 1.00, the rigidity (deformation resistance) of the tooth portion is improved by the reinforcement effect, and it can be said that as the value is larger, the reinforcement effect is more highly exhibited.

(Determination Criteria of Jumping Test)

a: jumping torque of more than 1.10 (presence of reinforcement effect)
b: jumping torque of more than 1.00 and 1.10 or less (reinforcement effect present)
c: jumping torque of 1.00 (reinforcement effect absent)
d: jumping torque of less than 1.00 (reinforcement effect absent)

[Durability Running Test]

A toothed belt was attached to a biaxial running tester including a drive pulley (number of teeth of 22) and a driven pulley (number of teeth of 22), and a running time until a failure (loss of tooth portion) occurred in the toothed belt was measured as a running service life. An attachment tension of the toothed belt was 230 N, a rotation speed of the driving pulley was 1,800 rpm, a load of the driven pulley was 9.0 kW, and an ambient temperature was 25°C (room temperature).

Regarding the running time until the failure (hereinafter referred to as running time), the running time (52 hours) in Comparative Example 1 in which the tooth portion is formed of only one rubber layer having a small elastic modulus is regarded as 1.00, and the running times of the respective Examples and Comparative Examples were shown in terms of relative values. It is shown that when the value is 1.00 or less, a reinforcement effect on the toothed belt according to Comparative Example 1 does not appear, and it is shown that when the value exceeds 1.00, the durability running performance is improved by the reinforcement effect, and it can be said that as the value is larger, the reinforcement effect is more highly exhibited.

(Determination Criteria of Durability Running Test)

a: running time until failure of longer than 1.50 (reinforcement effect present)
b: running time until failure of longer than 1.00 and 1.50 or less (reinforcement effect present)
c: running time until failure of 1.00 (reinforcement effect absent)
d: running time until failure of shorter than 1.00 (reinforcement effect absent)

[Overall Determination]

The jumping torque and the durability running performance were comprehensively evaluated in accordance with the following criteria.

rank A: case where jumping torque and durability running are both determined as a (acceptable)
rank B: case where jumping torque and durability running are both determined as b or one is determined as a and the other is determined as b (acceptable)
rank C: case where one of jumping torque and durability running is determined as c and the other is determined as a or b (acceptable)
rank D: case where jumping torque and durability running are both determined as c or one is determined as d (unacceptable)

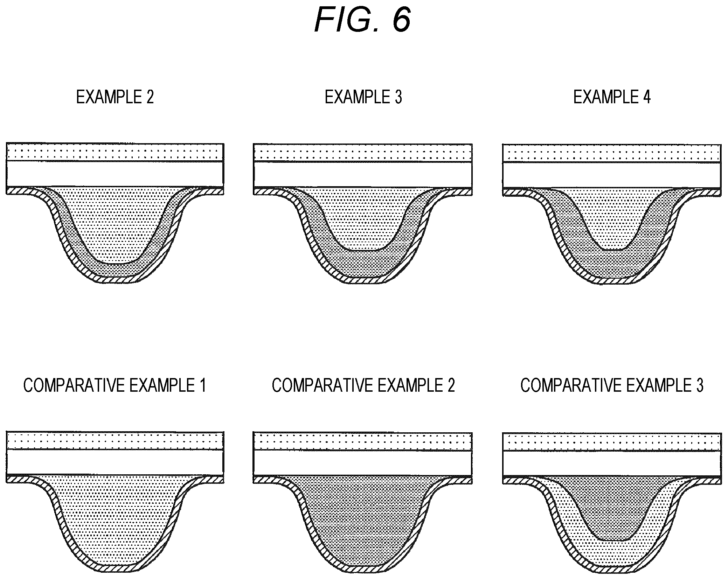

Test results of the toothed belts according to Examples and Comparative Examples are shown in Tables 5 to 8. Further, cross-sectional views of tooth portions of the respective toothed belts according to Examples and Comparative Examples are shown in FIG. 6.

Table 5

| | | Example | | | | | Comparative example | | |
|---|---|---|---|---|---|---|---|---|---|
| | | 1 | 2 | 3 | 4 | 5 | 1 | 2 | 3 |
| Structure of tooth portion | | Two-layer | Two-layer | Two-layer | Two-layer | Two-layer | One-layer | One-layer | Two-layer |
| Proportion of area occupied by first rubber layer with respect to all rubber layers constituting tooth portion | | 10% | 20% | 40% | 60% | 80% | - | - | 50% |
| Rubber composition | First rubber layer | R6 | | | | | R2 | R6 | R2 |
| | Second rubber layer | R2 | | | | | | | R6 |
| Tensile elastic modulus (MPa) [grain parallel direction] | First rubber layer | 5.7 | | | | | 2.3 | 5.7 | 2.3 |
| | Second rubber layer | 2.3 | | | | | | | 5.7 |
| | Ratio | 2.5 | | | | | - | - | 0.4 |

(continued)

| | | Example | | | | | Comparative example | | |
|---|---|---|---|---|---|---|---|---|---|
| | | 1 | 2 | 3 | 4 | 5 | 1 | 2 | 3 |
| Compressive elastic modulus (MPa) [grain parallel direction] | First rubber layer | 1.38 | | | | | 0.93 | 1.38 | 0.93 |
| | Second rubber layer | 0.93 | | | | | | | 1.38 |
| | Ratio | 1.48 | | | | | - | - | 0.67 |
| Hardness (type D) | First rubber layer | 80 | | | | | 65 | 80 | 65 |
| | Second rubber layer | 65 | | | | | | | 80 |
| Bending rigidity (MPa) | | 605 | 638 | 676 | 691 | 735 | 553 | 832 | 812 |
| | Determination | a | a | a | a | b | a | c | c |
| Tooth rigidity (N/mm) | | 1,225 | 1,354 | 1,454 | 1,510 | 1,546 | 1,092 | 1,592 | 1,275 |
| | Determination | b | a | a | a | a | c | a | b |
| Jumping torque (relative value) | | 1.06 | 1.15 | 1.18 | 1.21 | 1.27 | 1.00 | 1.32 | 1.07 |
| | Determination | b | a | a | a | a | c | a | b |
| Durability running (relative value) | | 1.38 | 2.02 | 2.63 | 1.78 | 1.04 | 1.00 | 0.46 | 0.85 |
| | Determination | b | a | a | a | b | c | d | d |
| Comprehensive determination | | B | A | A | A | B | D | D | D |

Table 6

| | | Comparative Example | Example | | | | | |
|---|---|---|---|---|---|---|---|---|
| | | 1 | 6 | 7 | 3 | 8 | 9 | 10 |
| Structure of tooth portion | | One-layer | Two-layer | | | | | |
| Proportion of area occupied by first rubber layer with respect to entire rubber layer constituting tooth portion | | - | 40% | | | | | |
| Rubber composition | First rubber layer | R2 | R3 | R4 | R6 | R7 | R8 | R9 |
| | Second rubber layer | | R2 | | | | | |
| Tensile elastic modulus (MPa) [grain parallel direction] | First rubber layer | 2.3 | 3.1 | 4.0 | 5.7 | 7.0 | 9.2 | 12.0 |
| | Second rubber layer | | 2.3 | | | | | |
| | Ratio | - | 1.3 | 1.7 | 2.5 | 3.0 | 4.0 | 5.2 |
| Compressive elastic modulus (MPa) [grain parallel direction] | First rubber layer | 0.93 | 1.20 | 1.33 | 1.38 | 1.45 | 1.52 | 1.55 |
| | Second rubber layer | | 0.93 | | | | | |
| | Ratio | - | 1.29 | 1.43 | 1.48 | 1.56 | 1.63 | 1.67 |

(continued)

| | | Comparative Example | Example | | | | | |
|---|---|---|---|---|---|---|---|---|
| | | 1 | 6 | 7 | 3 | 8 | 9 | 10 |
| Hardness (type D) | First rubber layer | 65 | 70 | 77 | 80 | 82 | 83 | 85 |
| | Second rubber layer | | 65 | | | | | |
| Bending rigidity (MPa) | | 553 | 602 | 652 | 676 | 724 | 805 | 845 |
| | Determination | a | a | a | a | b | c | c |
| Tooth rigidity (N/mm) | | 1,092 | 1,185 | 1,362 | 1,454 | 1,527 | 1,561 | 1,582 |
| | Determination | c | b | a | a | a | a | a |
| Jumping torque (relative value) | | 1.00 | 1.05 | 1.11 | 1.18 | 1.19 | 1.21 | 1.23 |
| | Determination | c | b | a | a | a | a | a |
| Durability running (relative value) | | 1.00 | 1.61 | 3.06 | 2.63 | 2.10 | 1.00 | 1.00 |
| | Determination | c | a | a | a | a | c | c |
| Comprehensive determination | | D | B | A | A | A | C | C |

Table 7

| | | Example | | |
|---|---|---|---|---|
| | | 11 | 12 | 13 |
| Structure of tooth portion | | Two-layer | | |
| Proportion of area occupied by first rubber layer with respect to entire rubber layer constituting tooth portion | | 10% | 60% | 80% |
| Rubber composition | First rubber layer | R3 | R7 | R7 |
| | Second rubber layer | R2 | | |
| Tensile elastic modulus (MPa) [grain parallel direction] | First rubber layer | 3.1 | 7.0 | 7.0 |
| | Second rubber layer | 2.3 | | |
| | Ratio | 1.3 | 3.0 | 3.0 |
| Compressive elastic modulus (MPa) [grain parallel direction] | First rubber layer | 1.20 | 1.45 | 1.45 |
| | Second rubber layer | 0.93 | | |
| | Ratio | 1.29 | 1.56 | 1.56 |
| Hardness (type D) | First rubber layer | 70 | 82 | 82 |
| | Second rubber layer | 65 | | |
| Bending rigidity (MPa) | | 573 | 795 | 798 |
| | Determination | a | b | b |
| Tooth rigidity (N/mm) | | 1,133 | 1,601 | 1,615 |
| | Determination | b | a | a |
| Jumping torque (relative value) | | 1.04 | 1.24 | 1.28 |
| | Determination | b | a | a |

(continued)

|  |  | Example | | |
|---|---|---|---|---|
|  |  | 11 | 12 | 13 |
| Durability running (relative value) | | 1.15 | 1.06 | 1.00 |
| Determination | | b | b | c |
| Comprehensive determination | | B | B | C |

Table 8

|  |  | Example | | | | |
|---|---|---|---|---|---|---|
|  |  | 14 | 15 | 16 | 17 | 18 |
| Structure of tooth portion | | Two-layer | | | | |
| Proportion of area occupied by first rubber layer with respect to entire rubber layer constituting tooth portion | | 40% | | | | |
| Rubber composition | First rubber layer | R3 | R6 | R8 | R7 | R9 |
|  | Second rubber layer | R1 | R3 | R3 | R4 | R4 |
| Tensile elastic modulus (MPa) [grain parallel direction] | First rubber layer | 3.1 | 5.7 | 9.2 | 7.0 | 12.0 |
|  | Second rubber layer | 1.0 | 3.1 | 3.1 | 4.0 | 4.0 |
|  | Ratio | 3.1 | 1.8 | 3.0 | 1.8 | 3.0 |
| Compressive elastic modulus (MPa) [grain parallel direction] | First rubber layer | 1.20 | 1.38 | 1.52 | 1.45 | 1.55 |
|  | Second rubber layer | 0.80 | 1.20 | 1.20 | 1.33 | 1.33 |
|  | Ratio | 1.50 | 1.15 | 1.27 | 1.09 | 1.17 |
| Hardness (type D) | First rubber layer | 70 | 80 | 83 | 82 | 85 |
|  | Second rubber layer | 61 | 70 | 70 | 77 | 77 |
| Bending rigidity (MPa) | | 584 | 684 | 819 | 773 | 858 |
| Determination | | a | a | c | b | c |
| Tooth rigidity (N/mm) | | 1,141 | 1,496 | 1,582 | 1,570 | 1,603 |
| Determination | | b | a | a | a | a |
| Jumping torque (relative value) | | 1.03 | 1.19 | 1.22 | 1.23 | 1.29 |
| Determination | | b | a | a | a | a |
| Durability running (relative value) | | 1.34 | 2.47 | 1.00 | 1.77 | 1.00 |
| Determination | | b | a | c | a | c |
| Comprehensive determination | | B | A | C | A | C |

|  |  | 19 | 20 | 21 | 22 | |
|---|---|---|---|---|---|---|
| Structure of tooth portion | | Two-layer | | | | |
| Proportion of area occupied by first rubber layer with respect to entire rubber layer constituting tooth portion | | 40% | | | | |
| Rubber composition | First rubber layer | R7 | R9 | R9 | R11 | |
|  | Second rubber layer | R5 | R5 | R1 | R10 | |
| Tensile elastic modulus (MPa) [grain parallel direction] | First rubber layer | 7.0 | 12.0 | 12.0 | 3.9 | |
|  | Second rubber layer | 5.0 | 5.0 | 1.0 | 2.3 | |
|  | Ratio | 1.4 | 2.4 | 12.0 | 1.7 | |

(continued)

| 19 | 20 | 21 | 22 | | |
|---|---|---|---|---|---|
| Compressive elastic modulus (MPa) [grain parallel direction] | First rubber layer | 1.45 | 1.55 | 1.55 | 1.31 |
| | Second rubber layer | 1.35 | 1.35 | 0.80 | 0.92 |
| | Ratio | 1.07 | 1.15 | 1.94 | 1.42 |
| Hardness (type D) | First rubber layer | 82 | 85 | 85 | 76 |
| | Second rubber layer | 78 | 78 | 61 | 64 |
| Bending rigidity (MPa) | | 791 | 869 | 820 | 648 |
| | Determination | b | c | c | a |
| Tooth rigidity (N/mm) | | 1,585 | 1,624 | 1,524 | 1,360 |
| | Determination | a | a | a | a |
| Jumping torque (relative value) | | 1.28 | 1.30 | 1.27 | 1.11 |
| | Determination | a | a | a | a |
| Durability running (relative value) | | 1.45 | 1.00 | 1.00 | 2.97 |
| | Determination | b | c | c | a |
| Comprehensive determination | | B | C | C | A |

(Examples 1 to 5)

These are examples of a toothed belt in which a tooth portion has a two-layer structure of a first rubber layer (front portion rubber layer) disposed on a front surface side along a contour of the tooth portion and a second rubber layer (inner rubber layer) disposed inside the tooth portion, the first rubber layer is formed of R6 (crosslinked rubber) having a tensile elastic modulus of 5.7 MPa and the second rubber layer is formed of R2 (crosslinked rubber) having a tensile elastic modulus of 2.3 MPa. A ratio of the tensile elastic modulus of the first rubber layer to the tensile elastic modulus of the second rubber layer is 2.5. Hereinafter, this ratio (tensile elastic modulus of first rubber layer/tensile elastic modulus of second rubber layer) is represented as "ratio of tensile elastic moduli of two layers".

In Examples 1 to 5, a proportion of an area occupied by the first rubber layer to all rubber layers constituting the tooth portion in a cross-sectional view of the tooth portion is varied to 10% (Example 1), 20% (Example 2), 40% (Example 3), 60% (Example 4), and 80% (Example 5).

As a result, the tooth rigidity is 1,225 N/mm (Example 1: determined as b), 1,354 N/mm (Example 2: determined as a), 1,454 N/mm (Example 3: determined as a), 1,510 N/mm (Example 4: determined as a), and 1,546 N/mm (Example 5: determined as a), which are at an acceptable level, and improved as the proportion of the area of the first rubber layer is increased.

On the other hand, bending rigidity is 605 MPa (Example 1: determined as a), 638 MPa (Example 2: determined as a), 676 MPa (Example 3: determined as a), 691 MPa (Example 4: determined as a), and 735 MPa (Example 5: determined as b), which are at an acceptable level, and improved as the proportion of the area of the first rubber layer is increased.

In addition, regarding the dynamic performance, the jumping torque (relative value) is 1.06 (Example 1: determined as b), 1.15 (Example 2: determined as a), 1.18 (Example 3: determined as a), 1.21 (Example 4: determined as a), and 1.27 (Example 5: determined as a), which are at an acceptable level, and increased as the proportion of the area of the first rubber layer is increased in the same tendency as the tooth rigidity.

Further, durability running (running time until failure (relative value)) is 1.38 (Example 1: determined as b), 2.02 (Example 2: determined as a), 2.63 (Example 3: determined as a), 1.78 (Example 4: determined as a), and 1.04 (Example 5: determined as b), which are at an acceptable level, and particularly increased when the proportion of the area of the first rubber layer is in a range of 20% to 60%.

In the comprehensive determination described above, the toothed belts according to Examples 1 to 5 are at an acceptable level (rank A or B).

(Comparative Examples 1 to 3)

Comparative Example 1 is an example of a toothed belt in which an entire rubber layer forming a tooth portion is formed only of R2 (crosslinked rubber) having a tensile elastic modulus of 2.3 MPa (relatively low elastic modulus), which forms the second rubber layer of Examples 1 to 5. The bending rigidity is 553 MPa (determined as a), which is better than that of Examples, but the tooth rigidity is 1,092 N/mm (determined as c), which is unacceptable. Regarding the dynamic performance, the jumping torque is as low as 101 N·m, and the durability running (running time until failure) is as short as 52 hours. Therefore, Comparative Example 1 is unacceptable (rank D) also in the comprehensive determination.

Comparative Example 2 is an example of a toothed belt in which an entire rubber layer forming a tooth portion is formed only of R6 (crosslinked rubber) having a tensile elastic modulus of 5.7 MPa (relatively high elastic modulus), which forms the first rubber layer of Examples 1 to 5. The tooth rigidity is 1,592 N/mm (determined as a), which is better than that of Examples, but the bending rigidity is 832 MPa (determined as c), which is unacceptable. Regarding the dynamic performance, the jumping torque (relative value) is 1.32 (determined as a), which is better than that of Examples, but the durability running (running time until failure (relative value)) is 0.46 (determined as d), and the comprehensive determination is unacceptable (rank D).

Comparative Example 3 is an example in which a tooth portion has a two-layer structure of a first rubber layer and a second rubber layer as in Examples, but elastic moduli of the first rubber layer and the second rubber layer are reversed. That is, R2 (crosslinked rubber) having a tensile elastic modulus of 2.3 MPa (relatively low elastic modulus) is used for the first rubber layer, and R6 (crosslinked rubber) having a tensile elastic modulus of 5.7 MPa (relatively high elastic modulus) is used for the second rubber layer. In a cross-sectional view of the tooth portion, a proportion of an area occupied by the first rubber layer to all the rubber layers constituting the tooth portion is 50%. As a result, the tooth rigidity is 1,275 N/mm (determined as b), which is at an acceptable level, but the bending rigidity is 812 MPa (determined as c), which is unacceptable. Regarding the dynamic performance, the jumping torque (relative value) is 1.07 (determined as b), which is at an acceptable level, but the durability running (running time until failure (relative value)) is 0.85 (determined as d), and the comprehensive determination is unacceptable (rank D).

In a case where the entire tooth portion is formed of a rubber layer having a low elastic modulus as in Comparative Example 1, the rigidity (deformation resistance) of the tooth portion is insufficient, and in a case where the entire tooth portion is formed of a rubber layer having a high elastic modulus as in Comparative Example 2, the bendability (low bending rigidity) is insufficient. Further, in a case where inside of the tooth portion is formed of a rubber layer having a higher elastic modulus than a front portion even when the tooth portion is formed of two layers as in Comparative Example 3, the bendability (low bending rigidity) is insufficient, and the level of the rigidity (deformation resistance) of the tooth portion is also lowered.

On the other hand, the aspect of the present embodiment can be said to be a balanced aspect that has the rigidity (high elastic modulus) of the tooth portion which can withstand the use under a condition where a higher load acts and that implements both rigidity (deformation resistance) and bendability (low bending rigidity: flexibility) of the tooth portion which are in a contradictory relation.

(Examples 6 to 10)

In contrast to the configuration of Example 3 (the proportion of the area occupied by the first rubber layer with respect to all the rubber layers constituting the tooth portion in the cross-sectional view of the tooth portion is 40%) having the most excellent durability running performance among Examples 1 to 5, Examples 6 to 10 are examples of toothed belts in which rubber compositions having different elastic moduli are used for the first rubber layer. The first rubber layer is formed using R3 (tensile elastic modulus of 3.1 MPa) in Example 6, R4 (tensile elastic modulus of 4.0 MPa) in Example 7, R6 (tensile elastic modulus of 5.7 MPa) in Example 3, R7 (tensile elastic modulus of 7.0 MPa) in Example 8, R8 (tensile elastic modulus of 9.2 MPa) in Example 9, and R9 (tensile elastic modulus of 12.0 MPa) in Example 10.

Variation of the elastic modulus is adjusted by varying a proportion of a first co-crosslinking agent contained in the first rubber layer to 3 parts by mass (Example 6), 6 parts by mass (Example 7), 11 parts by mass (Example 3), 14 parts by mass (Example 8), 20 parts by mass (Example 9), and 25 parts by mass (Example 10).

As a result, the tooth rigidity is 1,185 N/mm (Example 6: determined as b), 1,362 N/mm (Example 7: determined as a), 1,454 N/mm (Example 3: determined as a), 1,527 N/mm (Example 8: determined as a), 1,561 N/mm (Example 9: determined as a), and 1,582 N/mm (Example 10: determined as a), which are at an acceptable level, and improved as the elastic modulus of the first rubber layer is increased.

On the other hand, the bending rigidity is 602 MPa (Example 6: determined as a), 652 MPa (Example 7: determined as a), 676 MPa (Example 3: determined as a), 724 MPa (Example 8: determined as b), and 805 MPa (Example 9: determined as c), and 845 MPa (Example 10: determined as c), and is improved as the elastic modulus of the first rubber layer is increased.

In addition, regarding the dynamic performance, the jumping torque (relative value) is 1.05 (Example 6:

determined as b), 1.11 (Example 7: determined as a), 1.18 (Example 3: determined as a), 1.19 (Example 8: determined as a), 1.21 (Example 9: determined as a), and 1.23 (Example 10: determined as a), which are at an acceptable level, and increased as the elastic modulus of the first rubber layer is increased in the same tendency as the tooth rigidity, indicating a reinforcement effect with respect to Comparative Example 1.

On the other hand, durability running (running time until failure (relative value)) was varied to 1.61 (Example 6: determined as a), 3.06 (Example 7: determined as a), 2.63 (Example 3: determined as a), 2.10 (Example 8: determined as a), 1.00 (Example 9: determined as c), and 1.00 (Example 10: determined as c). Examples 9 and 10 in which the elastic modulus of the first rubber layer is large are equivalent to Comparative Example 1, and no reinforcement effect appears.

According to the comprehensive determination described above, the toothed belts of Examples 3 and 6 to 8 are at a high acceptable level (rank A or B) in that the reinforcement effect on both the jumping torque and the durability running performance appear. The toothed belts of Examples 9 and 10 are at an acceptable level (rank C) because the reinforcement effect of the jumping torque appears although the reinforcement effect on the durability running performance does not appear.

According to this result, it can be said that the elastic value of the first rubber layer is in a preferred range of 3.0 MPa to 7.0 MPa (particularly, 4.0 MPa to 6.0 MPa) in terms of tensile elastic modulus and 1.0 MPa to 1.5 MPa (particularly, 1.3 MPa to 1.4 MPa) in terms of compressive elastic modulus. In addition, it can be said that the proportion of the first co-crosslinking agent contained in the first rubber layer is preferably 3 parts by mass to 14 parts by mass (particularly 6 parts by mass to 11 parts by mass).

(Examples 11 to 13)

These are examples in which a relation between the proportion of the area occupied by the first rubber layer to all the rubber layers constituting the tooth portion (hereinafter referred to as area proportion) in the cross-sectional view of the tooth portion and the elastic modulus of the first rubber layer (proportion of first co-crosslinking agent contained in first rubber layer) is verified. Example 11 is an example in the vicinity of a lower limit of the reinforcement effect (case where the area proportion is small and the elastic modulus is also small), in which the area proportion is 10% and the tensile elastic modulus is 3.1 MPa (first co-crosslinking agent of 3 parts by mass). On the other hand, Examples 12 and 13 are examples in the vicinity of an upper limit of the reinforcement effect (case where the area proportion is large and the elastic modulus is also large), in the Example 12, the area proportion is 60% and the tensile elastic modulus is 7.0 MPa (first co-crosslinking agent of 14 parts by mass), and in Example 13, the area proportion is 80% and the tensile elastic modulus is 7.0 MPa (first co-crosslinking agent of 14 parts by mass).

As a result, the tooth rigidity is 1,133 N/mm (Example 11: determined as b), 1,601 N/mm (Example 12: determined as a), and 1,615 N/mm (Example 13: determined as a), which are at an acceptable level.

On the other hand, the bending rigidity is 573 MPa (Example 11: determined as a), 795 MPa (Example 12: determined as b), and 798 MPa (Example 13: determined as b), which are at an acceptable level.

In addition, regarding the dynamic performance, the jumping torque (relative value) is 1.04 (Example 11: determined as b), 1.24 (Example 12: determined as a), and 1.28 (Example 13: determined as a), which are at an acceptable level, indicating a reinforcement effect with respect to Comparative Example 1.

On the other hand, the durability running (running time until failure (relative value)) is 1.15 (Example 11: determined as b), 1.06 (Example 12: determined as b), and 1.00 (Example 13: determined as c). In Examples 11 and 12, the reinforcement effect with respect to Comparative Example 1 appears, but Example 13 in which the area proportion of the first rubber layer is the maximum and the elastic modulus is also large is equivalent to Comparative Example 1, and no reinforcement effect appears.

According to the comprehensive determination described above, the toothed belts according to Examples 11 and 12 are at a high acceptable level (rank B) in that the reinforcement effect on both the jumping torque and the durability running performance appears. The toothed belt according to Example 13 is at an acceptable level (rank C) because the reinforcement effect on the jumping torque appears although the reinforcement effect on the durability running performance does not appear.

(Examples 14 to 21)

In contrast to the configuration of Example 3 (the proportion of the area occupied by the first rubber layer with respect to all the rubber layers constituting the tooth portion in the cross-sectional view of the tooth portion is 40%) having the most excellent durability running performance among Examples 1 to 5, Examples 14 to 21 are examples of toothed belts in which a combination of the elastic moduli of the crosslinked rubber compositions used in the first rubber layer and the second rubber layer is varied.

Example 14 is an example of a toothed belt in which the first rubber layer is formed of R3 (crosslinked rubber) having a tensile elastic modulus of 3.1 MPa and the second rubber layer is formed of R1 (crosslinked rubber) having a tensile elastic modulus of 1.0 MPa. A ratio of the tensile elastic moduli of the two layers is 3.1. In the toothed belt, each rubber layer has a small elastic modulus as compared with Example 3, but the bending rigidity is 584 MPa (determined as a), and the tooth rigidity is 1,141 N/mm (determined as b). Regarding the dynamic performance, the jumping torque (relative value) is 1.03 (determined as b), the durability running (running time until failure (relative value)) is 1.34 (determined as b), and the comprehensive determination is at an acceptable level (rank B).

Example 15 is an example of a toothed belt in which R3 (tensile elastic modulus of 3.1 MPa) is used for the second rubber layer, R6 (tensile elastic modulus of 5.7 MPa) is used for the first rubber layer, and the ratio of the tensile elastic moduli of the two layers is 1.8. In the toothed belt, the elastic modulus of the first rubber layer is equivalent to Example 3 and the elastic modulus of the second rubber layer is large, the bending rigidity is 684 MPa (determined as a) and the tooth rigidity is 1,496 N/mm (determined as a). Regarding the dynamic performance, the jumping torque (relative value) is 1.19 (determined as a), and the durability running (running time until failure (relative value)) is 2.47 (determined as a), and the comprehensive determination is equivalent to Example 3 and is at an acceptable level (rank A).

Example 16 is an example of a toothed belt in which R3 (tensile elastic modulus of 3.1 MPa) is used for the second rubber layer, R8 (tensile elastic modulus of 9.2 MPa) is used for the first rubber layer, and the ratio of the tensile elastic moduli of the two layers is 3.0. In the toothed belt, the elastic modulus of the second rubber layer is equivalent to Example 15 and the elastic modulus of the first rubber layer is large, but the bending rigidity is 819 MPa (determined as c), and the tooth rigidity is 1,582 N/mm (determined as a). Regarding the dynamic performance, the jumping torque (relative value) is 1.22 (determined as a), the durability running (running time until failure (relative value)) is 1.00 (determined as c), and the comprehensive determination is at an acceptable level (rank C) because the reinforcement effect on the jumping torque appears although the reinforcement effect on the durability running performance does not appear.

Example 17 is an example of a toothed belt in which R4 (tensile elastic modulus of 4.0 MPa) is used for the second rubber layer, R7 (tensile elastic modulus of 7.0 MPa) is used for the first rubber layer, and the ratio of the tensile elastic moduli of the two layers is 1.8. In the toothed belt, each rubber layer has a large elastic modulus in contrast to Example 3, and the bending rigidity is 773 MPa (determined as b), and the tooth rigidity is 1,570 N/mm (determined as a). Regarding the dynamic performance, the jumping torque (relative value) is 1.23 (determined as a), the durability running (running time until failure (relative value)) is 1.77 (determined as a), and the comprehensive determination is equivalent to Example 3 and at an acceptable level (rank A).

Example 18 is an example of a toothed belt in which R4 (tensile elastic modulus of 4.0 MPa) is used for the second rubber layer, R9 (tensile elastic modulus of 12.0 MPa) is used for the first rubber layer, and the ratio of the tensile elastic moduli of the two layers is 3.0. In the toothed belt, the elastic modulus of the second rubber layer is equivalent to Example 17 and the elastic modulus of the first rubber layer is large, and the bending rigidity is 858 MPa (determined as c), and the tooth rigidity is 1,603 N/mm (determined as a). Regarding the dynamic performance, the jumping torque (relative value) is 1.29 (determined as a), the durability running (running time until failure (relative value)) is 1.00 (determined as c), and the comprehensive determination is at an acceptable level (rank C) because the reinforcement effect on the jumping torque appears although the reinforcement effect on the durability running performance does not appear.

Example 19 is an example of a toothed belt in which R5 (tensile elastic modulus of 5.0 MPa) is used for the second rubber layer, R7 (tensile elastic modulus of 7.0 MPa) is used for the first rubber layer, and the ratio of the tensile elastic moduli of the two layers is 1.4. In the toothed belt, the elastic modulus of the first rubber layer is equivalent to Example 17 and the elastic modulus of the second rubber layer is large, and the bending rigidity is 791 MPa (determined as b), and the tooth rigidity is 1,585 N/mm (determined as a). Regarding the dynamic performance, the jumping torque (relative value) is 1.28 (determined as a), and the durability running (running time until failure (relative value)) is 1.45 (determined as b), and the comprehensive determination is at an acceptable level (rank B).

Example 20 is an example of a toothed belt in which R5 (tensile elastic modulus of 5.0 MPa) is used for the second rubber layer, R9 (tensile elastic modulus of 12.0 MPa) is used for the first rubber layer, and the ratio of the tensile elastic moduli of the two layers is 2.4. In the toothed belt, the elastic moduli of the two layers are the largest among those of Examples, and the bending rigidity is 869 MPa (determined as c), and the tooth rigidity is 1,624 N/mm (determined as a). Regarding the dynamic performance, the jumping torque (relative value) is 1.30 (determined as a), the durability running (running time until failure (relative value)) is 1.00 (determined as c), and the comprehensive determination is at an acceptable level (rank C) because the reinforcement effect on the jumping torque appears although the reinforcement effect on the durability running performance does not appear.

Example 21 is an example of a toothed belt in which R1 (tensile elastic modulus of 1.0 MPa) is used for the second rubber layer, R9 (tensile elastic modulus of 12.0 MPa) is used for the first rubber layer, and the ratio of the tensile elastic moduli of the two layers is 12.0. In the toothed belt, the ratio of the tensile elastic moduli of the two layers is the largest among those of Examples, and the bending rigidity is 820 MPa (determined as c), and the tooth rigidity is 1,524 N/mm (determined as a). Regarding the dynamic performance, the jumping torque (relative value) is 1.27 (determined as a), the durability running (running time until failure (relative value)) is 1.00 (determined as c), and the comprehensive determination is at an acceptable level (rank C) because the reinforcement effect on the jumping torque appears although the reinforcement effect on the durability running performance does not appear.

(Example 22)

Example 22 is an example of a toothed belt in which a reinforcing inorganic filler (carbon black) is not used in contrast to the configuration of Example 7 (the first rubber layer is R4, and the second rubber layer is R2) having the most excellent durability running performance among Examples 1 to 21. That is, it is an example of a toothed belt in which the first rubber layer is formed of a crosslinked rubber composition of R11 (tensile elastic modulus of 3.9 MPa) having a formulation obtained by removing carbon black from R4, and the second rubber layer is formed of a crosslinked rubber composition of R10 (tensile elastic modulus of 2.3 MPa) having a formulation obtained by removing carbon black from R2.

The bending rigidity is 648 MPa (determined as a), and the tooth rigidity is 1,360 N/mm (determined as a). Regarding the dynamic performance, the jumping torque (relative value) is 1.11 (determined as a), the durability running (running time until failure (relative value)) is 2.97 (determined as a), and the comprehensive determination is equivalent to Example 7 and is at an acceptable level (rank A).

According to the above results, it is confirmed that a tooth portion is formed of a first rubber layer formed along a tooth fabric and a second rubber layer formed between the first rubber layer and a tension member, and adjustment is performed so that an elastic modulus of the first rubber layer is larger than an elastic modulus of the second rubber layer, thereby implementing both rigidity and bendability of the tooth portion which are in a contradictory relation, preventing jumping (tooth skipping) during belt running, preventing chipping (tooth chipping) of the tooth portion, and adapting to a long service life during high load running.

INDUSTRIAL APPLICABILITY

The toothed belt (synchronous power-transmission belt or toothed power-transmission belt) according to the present invention can be combined with a toothed pulley to be used in various fields in which synchronization between input and output is required, for example, a power-transmission system in a vehicle such as an automobile or a motorcycle, a power-transmission system such as a motor or a pump of an industrial machine, a machine such as an automatic door or an automated machine, a copier, and a printer. In particular, it can be used as a power-transmission belt (timing belt or cogged belt) for a high load (high horsepower) application of an industrial machine or rear-wheel drive of a motorcycle.

Although the present invention has been described in detail with reference to specific embodiments, it is apparent to those skilled in the art that various changes and modifications can be made without departing from the scope of the present invention.

The present application is based on Japanese Patent Application No. 2021-122815 filed on July 27, 2021, Japanese Patent Application No. 2022-041284 filed on March 16, 2022, and Japanese Patent Application No. 2022-107110 filed on July 1, 2022.

REFERENCE SIGNS LIST

1: toothed belt
1a: tooth portion
1b: tooth bottom portion
1c: back portion
2: tooth fabric
3: first rubber layer
4: second rubber layer
5: tension member
6: back rubber layer

**Claims**

1. A toothed belt (1) comprising:

   a back portion (1c) in which a tension member (5) extending along a belt circumferential direction is embedded;
   a plurality of tooth portions (1a) formed on an inner circumferential surface of the back portion (1c) with an interval in the belt circumferential direction;
   a back rubber layer (6) formed on a belt outer circumference side with respect to the tension member (5); and
   a first rubber layer (3) and a second rubber layer (4) formed on a belt inner circumferential side with respect to the tension member (5), wherein

an inner circumferential belt surface is formed of a tooth fabric (2),

the back portion (1c) comprises the back rubber layer (6), and

the tooth portion (1a) comprises the tooth fabric (2), the first rubber layer (3) formed along the tooth fabric (2), and the second rubber layer (4) interposed between the first rubber layer (3) and the tension member (5);

**characterized in that**

an elastic modulus of the first rubber layer (3) is larger than an elastic modulus of the second rubber layer (4).

2. The toothed belt (1) according to claim 1, wherein

an area proportion of the first rubber layer (3) is 10 area% to 80 area% with respect to a total area of the first rubber layer (3) and the second rubber layer (4) in a cross-sectional view in the belt circumferential direction.

3. The toothed belt (1) according to claim 1 or 2, wherein

a tensile elastic modulus of the first rubber layer (3) is 0.6 MPa to 20 MPa, and a tensile elastic modulus of the second rubber layer (4) is 0.5 MPa to 5 MPa.

4. The toothed belt (1) according to any one of claims 1 to 3, wherein

a tensile elastic modulus of the first rubber layer (3) is 1.2 times to 4 times a tensile elastic modulus of the second rubber layer (4).

5. The toothed belt (1) according to any one of claims 1 to 4, wherein

the first rubber layer (3) comprises a first crosslinked rubber composition comprising a first rubber component, a first crosslinking agent, and a first co-crosslinking agent,

the second rubber layer (4) comprises a second crosslinked rubber composition comprising a second rubber component, a second crosslinking agent, and a second co-crosslinking agent,

the first rubber component comprises a first composite polymer comprising a hydrogenated nitrile rubber and an unsaturated carboxylic acid metal salt,

the second rubber component comprises a second composite polymer comprising a hydrogenated nitrile rubber and an unsaturated carboxylic acid metal salt,

a proportion of the first co-crosslinking agent with respect to 100 parts by mass of the first rubber component is 1 part by mass to 40 parts by mass, and

a proportion of the second co-crosslinking agent with respect to 100 parts by mass of the second rubber component is 0.2 parts by mass to 25 parts by mass.

6. The toothed belt (1) according to claim 5, wherein

the first crosslinked rubber composition further comprises a first reinforcing inorganic filler,

the second crosslinked rubber composition further comprises a second reinforcing inorganic filler,

a proportion of the first composite polymer in the first rubber component is 80 mass% or more,

a proportion of the second composite polymer in the second rubber component is 30 mass% or more, the first crosslinking agent comprises a first organic peroxide, and a proportion of the first organic peroxide with respect to 100 parts by mass of the first rubber component is 1 part by mass to 20 parts by mass,

the second crosslinking agent comprises a second organic peroxide, and a proportion of the second organic peroxide with respect to 100 parts by mass of the second rubber component is 0.5 parts by mass to 5 parts by mass,

a proportion of the first reinforcing inorganic filler with respect to 100 parts by mass of the first rubber component is 10 parts by mass or less, and

a proportion of the second reinforcing inorganic filler with respect to 100 parts by mass of the second rubber component is 10 parts by mass or less.

7. A method for manufacturing a toothed belt (1) according to any one of claims 1 to 6, the method comprising:

a preforming step of preparing a preformed body in which a tooth fabric precursor for forming a tooth fabric (2), an uncrosslinked rubber sheet for forming a first rubber layer (3), and an uncrosslinked rubber sheet for forming a second rubber layer (4) are laminated.

**Patentansprüche**

1. Zahnriemen (1), umfassend:

   einen hinteren Abschnitt (1c), in dem ein Spannungselement (5), das sich entlang einer Riemenumfangsrichtung erstreckt, eingebettet ist;
   eine Vielzahl von Zahnabschnitten (1a), die an einer Innenumfangsfläche des hinteren Abschnitts (1c) in einem Abstand in der Riemenumfangsrichtung gebildet ist;
   eine hintere Kautschukschicht (6), die in Bezug auf das Spannungselement (5) an einer Riemenaußenumfangsseite gebildet ist; und
   eine erste Kautschukschicht (3) und eine zweite Kautschukschicht (4), die in Bezug auf das Spannungselement (5) an einer Riemeninnenumfangsseite gebildet sind, wobei
   die Riemeninnenumfangsfläche aus einem Zahngewebe (2) gebildet ist,
   der hintere Abschnitt (1c) die hintere Kautschukschicht (6) umfasst, und
   der Zahnabschnitt (1a) das Zahngewebe (2), die erste Kautschukschicht (3) entlang des Zahngewebes (2) gebildet und die zweite Kautschukschicht (4) zwischen der ersten Kautschukschicht (3) und dem Spannungselement (5) eingefügt umfasst;
   **dadurch gekennzeichnet ist, dass**
   ein Elastizitätsmodul der ersten Kautschukschicht (3) größer ist als ein Elastizitätsmodul der zweiten Kautschukschicht (4).

2. Zahnriemen (1) nach Anspruch 1, wobei
   ein Bereichsanteil der ersten Kautschukschicht (3) in Bezug auf einen Gesamtbereich der ersten Kautschukschicht (3) und der zweiten Kautschukschicht (4) in einer Querschnittssicht in der Riemenumfangsrichtung 10 Bereichs-% bis 80 Bereichs-% beträgt.

3. Zahnriemen (1) nach Anspruch 1 oder 2, wobei
   ein Zug-Elastizitätsmodul der ersten Kautschukschicht (3) 0,6 MPa bis 20 MPa beträgt und ein Zug-Elastizitätsmodul der zweiten Kautschukschicht (4) 0,5 MPa bis 5 MPa beträgt.

4. Zahnriemen (1) nach einem der Ansprüche 1 bis 3, wobei
   ein Zug-Elastizitätsmodul der ersten Kautschukschicht (3) das 1,2-Fache bis 4-Fache eines Zug-Elastizitätsmoduls der zweiten Kautschukschicht (4) beträgt.

5. Zahnriemen (1) nach einem der Ansprüche 1 bis 4, wobei

   die erste Kautschukschicht (3) eine erste vernetzte Kautschukzusammensetzung umfasst, die eine erste Kautschukkomponente, ein erstes Vernetzungsmittel und ein erstes Co-Vernetzungsmittel umfasst,
   die zweite Kautschukschicht (4) eine zweite vernetzte Kautschukzusammensetzung umfasst, die eine zweite Kautschukkomponente, ein zweites Vernetzungsmittel und ein zweites Co-Vernetzungsmittel umfasst,
   die erste Kautschukkomponente ein erstes Verbundpolymer umfasst, das einen hydrogenierten Nitrilkautschuk und ein ungesättigtes Carbonsäure-Metallsalz umfasst,
   die zweite Kautschukkomponente ein zweites Verbundpolymer umfasst, das einen hydrogenierten Nitrilkautschuk und ein ungesättigtes Carbonsäure-Metallsalz umfasst,
   ein Anteil des ersten Co-Vernetzungsmittels in Bezug auf 100 Massenteile der ersten Kautschukkomponente 1 Massenteil bis 40 Massenteile beträgt, und
   ein Anteil des zweiten Co-Vernetzungsmittels in Bezug auf 100 Massenteile der zweiten Kautschukkomponente 0,2 Massenteile bis 25 Massenteile beträgt.

6. Zahnriemen (1) nach Anspruch 5, wobei

   die erste vernetzte Kautschukzusammensetzung weiter einen ersten verstärkenden anorganischen Füllstoff umfasst,
   die zweite vernetzte Kautschukzusammensetzung weiter einen zweiten verstärkenden anorganischen Füllstoff umfasst,
   ein Anteil des ersten Verbundpolymers in der ersten Kautschukkomponente 80 Massen-% oder mehr beträgt,
   ein Anteil des zweiten Verbundpolymers in der zweiten Kautschukkomponente 30 Massen-% oder mehr beträgt,
   das erste Vernetzungsmittel ein erstes organisches Peroxid umfasst und ein Anteil des ersten organischen Peroxids in Bezug auf 100 Massenteile der ersten Kautschukkomponente 1 Massenteil bis 20 Massenteile beträgt,

das zweite Vernetzungsmittel ein zweites organisches Peroxid umfasst und ein Anteil des zweiten organischen Peroxids in Bezug auf 100 Massenteile der zweiten Kautschukkomponente 0,5 Massenteile bis 5 Massenteile beträgt,

ein Anteil des ersten verstärkenden anorganischen Füllstoffs in Bezug auf 100 Massenteile der ersten Kautschukkomponente 10 Massenteile oder weniger beträgt, und

ein Anteil des zweiten verstärkenden anorganischen Füllstoffs in Bezug auf 100 Massenteile der zweiten Kautschukkomponente 10 Massenteile oder weniger beträgt.

7. Verfahren zur Herstellung eines Zahnriemens (1) nach einem der Ansprüche 1 bis 6, wobei das Verfahren umfasst: einen Vorformungsschritt des Vorbereitens eines vorgeformten Körpers, in dem ein Zahngewebe-Vorläufer zum Bilden des Zahngewebes (2), eine unvernetzte Kautschukbahn zum Bilden einer ersten Kautschukschicht (3) und eine unvernetzte Kautschukbahn zum Bilden einer zweiten Kautschukschicht (4) laminiert werden.

## Revendications

1. Courroie crantée (1) comprenant :

    une partie arrière (1c) dans laquelle un élément de traction (5) s'étendant le long d'une direction circonférentielle de la courroie est incorporé ;
    une pluralité de parties dent (1a) formées sur une surface circonférentielle interne de la partie arrière (1c) avec un intervalle dans la direction circonférentielle de la courroie ;
    une couche de caoutchouc arrière (6) formée sur un côté circonférentiel externe de la courroie par rapport à l'élément de traction (5) ; et
    une première couche de caoutchouc (3) et une deuxième couche de caoutchouc (4) formées sur un côté circonférentiel interne de la courroie par rapport à l'élément de traction (5), dans laquelle
    une surface circonférentielle interne de la courroie est formée d'un tissu de dent (2),
    la partie arrière (1c) comprend la couche de caoutchouc arrière (6), et
    la partie dent (1a) comprend le tissu de dent (2), la première couche de caoutchouc (3) formée le long du tissu de dent (2) et la deuxième couche de caoutchouc (4) interposée entre la première couche de caoutchouc (3) et l'élément de traction (5) ;
    **caractérisée en ce que**
    un module d'élasticité de la première couche de caoutchouc (3) est plus grand qu'un module d'élasticité de la deuxième couche de caoutchouc (4).

2. Courroie crantée (1) selon la revendication 1, dans laquelle
    une proportion de superficie de la première couche de caoutchouc (3) est de 10 % en superficie à 80 % en superficie par rapport à une superficie totale de la première couche de caoutchouc (3) et de la deuxième couche de caoutchouc (4) dans une vue en coupe dans la direction circonférentielle de la courroie.

3. Courroie crantée (1) selon la revendication 1 ou la revendication 2, dans laquelle
    un module d'élasticité en traction de la première couche de caoutchouc (3) est 0,6 MPa à 20 MPa, et un module d'élasticité en traction de la deuxième couche de caoutchouc (4) est 0,5 MPa à 5 MPa.

4. Courroie crantée (1) selon l'une quelconque des revendications 1 à 3, dans laquelle
    un module d'élasticité en traction de la première couche de caoutchouc (3) fait 1,2 fois à 4 fois un module d'élasticité en traction de la deuxième couche de caoutchouc (4).

5. Courroie crantée (1) selon l'une quelconque des revendications 1 à 4, dans laquelle

    la première couche de caoutchouc (3) comprend une première composition de caoutchouc réticulé comprenant un premier composant de caoutchouc, un premier agent de réticulation et un premier coagent de réticulation,
    la deuxième couche de caoutchouc (4) comprend une deuxième composition de caoutchouc réticulé comprenant un deuxième composant de caoutchouc, un deuxième agent de réticulation et un deuxième coagent de réticulation,
    le premier composant de caoutchouc comprend un premier polymère composite comprenant un caoutchouc nitrile hydrogéné et un sel métallique d'acide carboxylique insaturé,

le deuxième composant de caoutchouc comprend un deuxième polymère composite comprenant un caoutchouc nitrile hydrogéné et un sel métallique d'acide carboxylique insaturé,

une proportion du premier coagent de réticulation par rapport à 100 parts en masse du premier composant de caoutchouc est de 1 part en masse à 40 parts en masse, et

une proportion du deuxième coagent de réticulation par rapport à 100 parts en masse du deuxième composant de caoutchouc est de 0,2 part en masse à 25 parts en masse.

6. Courroie crantée (1) selon la revendication 5, dans laquelle

la première composition de caoutchouc réticulé comprend en outre une première charge inorganique renforçante,

la deuxième composition de caoutchouc réticulé comprend en outre une deuxième charge inorganique renforçante,

une proportion du premier polymère composite dans le premier composant de caoutchouc est de 80 % en masse ou plus,

une proportion du deuxième polymère composite dans le deuxième composant de caoutchouc est de 30 % en masse ou plus,

le premier agent de réticulation comprend un premier peroxyde organique, et une proportion du premier peroxyde organique par rapport à 100 parts en masse du premier composant de caoutchouc est de 1 part en masse à 20 parts en masse,

le deuxième agent de réticulation comprend un deuxième peroxyde organique, et une proportion du deuxième peroxyde organique par rapport à 100 parts en masse du deuxième composant de caoutchouc est de 0,5 part en masse à 5 parts en masse,

une proportion de la première charge inorganique renforçante par rapport à 100 parts en masse du premier composant de caoutchouc est de 10 parts en masse ou moins, et

une proportion de la deuxième charge inorganique renforçante par rapport à 100 parts en masse du deuxième composant de caoutchouc est de 10 parts en masse ou moins.

7. Procédé de fabrication d'une courroie crantée (1) selon l'une quelconque des revendications 1 à 6, le procédé comprenant :

une étape de préformage consistant à préparer un corps préformé dans lequel un précurseur de tissu de dent pour former un tissu de dent (2), une feuille de caoutchouc non réticulé pour former une première couche de caoutchouc (3) et une feuille de caoutchouc non réticulé pour former une deuxième couche de caoutchouc (4) sont stratifiés.

# FIG. 1

WIDTH DIRECTION

CIRCUMFERENTIAL DIRECTION

# FIG. 2

# FIG. 3

# FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011085160 A
- WO 2011045984 A
- US 2012252619 A1
- JP 2021122815 A
- JP 2022041284 A
- JP 2022107110 A